(19) Europäisches Patentamt

European Patent Office

Office européen des brevets

(11) **EP 0 844 115 B1**

(12) **EUROPÄISCHE PATENTSCHRIFT**

(45) Veröffentlichungstag und Bekanntmachung des Hinweises auf die Patenterteilung:
**10.04.2002  Patentblatt 2002/15**

(51) Int Cl.$^7$: **B60G 17/015**

(21) Anmeldenummer: **97118421.3**

(22) Anmeldetag: **23.10.1997**

(54) **Steuerungsverfahren für Schwingungsdämpfer in einem Fahrzeug mit einer Niveauregeleinrichtung**

Control method for shock absorbers of a vehicle having a levelling system

Procédé de commande des amortisseurs d'un véhicule à régulation de niveau

(84) Benannte Vertragsstaaten:
**DE FR IT NL SE**

(30) Priorität: **21.11.1996  DE 19648175**

(43) Veröffentlichungstag der Anmeldung:
**27.05.1998   Patentblatt 1998/22**

(73) Patentinhaber: **WABCO GmbH & Co. OHG
30453 Hannover (DE)**

(72) Erfinder:
  • **Färber, Joachim
    30453 Hannover (DE)**
  • **Meier, Jörg
    31840 Hess. Oldendorf (DE)**
  • **Lentz, Uwe
    31535 Neustadt (DE)**

(74) Vertreter: **Schrödter, Manfred, Dipl.-Ing.
WABCO GmbH & Co. OHG
Postfach 91 12 62
30432 Hannover (DE)**

(56) Entgegenhaltungen:
**EP-A- 0 556 055          EP-A- 0 563 845
EP-A- 0 622 255          DE-A- 4 011 732**

• **CHERRY A S ET AL: "FUZZY LOGIC CONTROL OF AN AUTOMOTIVE SUSPENSION SYSTEM" IEE PROCEEDINGS: CONTROL THEORY AND APPLICATIONS, Bd. 142, Nr. 2, März 1995 (1995-03), Seite 149-160 XP000504262 Stevenage, GB ISSN: 1350-2379**
• **SCHÖNFELD K H ET AL: "ELECTRONICALLY CONTROLLED AIR SUSPENSION (ECAS) FOR COMMERCIAL VEHICLES" SAE PAPER, Bd. SP892, Nr. 912671, November 1991 (1991-11), Seiten 15-24, XP000292479 Warrendale, US**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Steuerung der Schwingungsdämpfer in einem Fahrzeug mit einer Niveauregeleinrichtung.

Durch die Firmenschrift

"ESAC - Elektronisch gesteuerte Fahrwerksdämpfung" (WABCO Westinghouse Fahrzeugbremsen, WABCO Standard GmbH; Wabcodruck 826 001 173 3/8.94)

ist eine Niveauregeleinrichtung mit Dämpfersteuerung bekannt.

Die bekannte Schrift zeigt ein System zur adaptiven Dämpferverstellung, bei dem in Abhängigkeit vom aktuellen Fahrzustand die jeweils geeignete Dämpferkennung (weich, mittel, hart) der verstellbaren Stoßdämpfer aktiviert wird. Von der bei ungestörter Fahrt gegebenen weichen, rein komfortorientierten Dämpferkennung wird in eine harte, und damit fahrsichere Dämpferkennung umgeschaltet, wenn z. B. heftige Lenkmanöver einen Anlaß zum Aufschaukeln des Fahrzeugs geben. Eine straffere Dämpferkennung wird auch aktiviert, wenn Fahrbahnunebenheiten den Fahrzeugaufbau zu starken Bewegungen anregen. Durch die Stoßdämpferverstellung wird außerdem ein störendes Anfahraufbäumen oder ein Bremsnicken von Fahrzeugen mit kurzem Radstand stark vermindert.

Die Umschaltung in eine straffere Dämpferkennung erfolgt, wenn Störungen der o. g. Art auf das Fahrzeug einwirken. Solche als Folge einer entsprechenden Fahrzeugreaktion ausgelösten Störungen werden von der Elektronik anhand der Sensor-Signale für die Federwege "vorn", "hinten links" und "hinten rechts" erkannt.

Mit der Sensierung des Federweges an drei Meßpunkten wird die Bewegung des Fahrzeug-Aufbaus ermittelt. Aus der Aufbaubewegung wird dann ein für den aktuellen Fahrzustand maßgeblicher Dämpfungsbedarf ermittelt, und dieser Dämpfungsbedarf bestimmt die Wahl der geeigneten Dämpferkennung.

Bei Frequenzen der Aufbaubewegung im Bereich der Eigenfrequenz des Fahrzeugaufbaus wird aufgrund der Resonanzüberhöhung ein Schwellwert zur Umschaltung in eine härtere Dämpferkennung schon frühzeitig, d. h. bei vergleichsweise geringen Störungen erreicht, während bei Frequenzen außerhalb der Farhzeugaufbau-Eigenfrequenz hierfür deutlich größere Störungen erforderlich sind. Eine derartige Abhängigkeit der Wirkung einer Störung von der Frequenz der Störung ist verbesserungsfähig, insbesondere wenn diese Abhängigkeit im Bereich der Eigenfrequenz gegeben ist.

Bis eine Aufbaubewegung den Schwellwert zur Umschaltung in die Dämpferkennung "mittel" erreicht, bleibt die weiche Dämpferkennung eingeschaltet. Bei Störungen wird ein solches Fahrzeug subjektiv als zu weich gedämpft empfunden, insbesondere dann, wenn eine störungsbedingte Aufbaubewegung den Schwellwert nur knapp nicht erreicht. Als Abhilfe kann z. B. der Stoßdämpfer in seiner weichsten Stufe härter ausgelegt werden, was jedoch den Bereich der dynamischen Einstellbarkeit verringert.

Die adaptive Dämpferverstellung nach der bekannten Schrift zeigt eine Abhängigkeit von verschiedenen festen Parametern.

Die EP 0 563 845 A1 beschreibt eine elektrische Steuereinrichtung für einen Fahrzeug-Aufhängungsmechanismus, bei der die Federrate und die Dämpfungskraft unabhängig voneinander gesteuert werden können. Hierzu werden die Größen der vertikalen Auslenkung und der Geschwindigkeit des Fahrzeugaufbaus erfaßt und ausgewertete. Die Federrate wird mit einer Erhöhung der vertikalen Auslenkung vergrößert und mit einer Erhöhung der Aufbaugeschwindigkeit verringert, wogegen die Dämpfungskraft mit einer Erhöhung der vertikalen Auslenkung verringert und mit einer Erhöhung der Aufbaugeschwindigkeit erhöht wird.

Der Fahrzeug-Aufhängungsmechanismus besteht aus Luftfedern und elektrisch steuerbaren Dämpfern in den drei Stufen weich, mittel und hart; für die Luftfedern ist eine Niveauregelung vorgesehen, im Zuge derer die Fahrzeughöhe durch Festlegung der Luftmenge in den Luftfedern kontinuierlich angepaßt wird. Zur Niveauregelung werden die Signale von Höhensensoren auswertet und in Abhängigkeit davon Ventile für die Luftfedern gesteuert. Die Niveauregelung, die Veränderung der Federkonstante und die Veränderung der Dämpfungskraft wird durch einen Mikrocomputer vorgenommen.

Die Bestimmung von Federkonstante und Dämpfungskraft erfolgt nach dem Verfahren der Fuzzy-Auswertung; hierzu werden in erster Linie für die vertikale Höhe und die vertikale Aufbaugeschwindigkeit linguistische Variable mit Termen und Zugehörigkeitsfunktionen festgelegt.

Im Rahmen dieser Auswertung werden auch weitere physikalische Größen, wie die Längsbeschleunigung, die Querbeschleunigung, die Fahrzeuggeschwindigkeit und die Lenkgeschwindigkeit herangezogen. Für diese physikalischen Größen werden ebenfalls linguistische Variable mit Termen und Zugehörigkeitsfunktionen bestimmt.

In dem Artikel "Fuzzy logic control of an automotive suspension system" aus den IEE Proceedings: Control Theory and Applications 142 (1995) March, No. 2 ist eine Studie zur Realisierung eines Fuzzy Algorithmus für einen Oberklassen-Pkw mit stufenlos regelbaren Dämpfern beschrieben, der in einer Software-Umgebung simuliert wird, und dessen Simulationsergebnisse mit entsprechenden Simulationsergebnissen eines Oberklassen-Pkw mit einer konventionellen Federung verglichen wird.

Der Vergleich der Simulationsergebnisse zeigt, daß mit Hilfe der Fuzzy Logik für einen derartigen Dämpfer schon bei relativ einfachen Regeln erhebliche Verbesserungen der Dämpfungseigenschaften erzielt werden können, ohne daß in der Steuerung ein komplexes und aufwendiges Systemmodel hinterlegt sein muß.

Dem Fuzzy-Controller der Studie werden lediglich acht Regeln zugrundegelegt, aufgrund derer Dämpfungsrate bestimmt ist. In diesen Regeln werden linguistische Variable, die sowohl das Verhalten des Fahrzeugs wie die Fahrerreaktion beschreiben, verwendet. Es sind dies die Variablen der Fahrzeuggeschwindigkeit, der Längs- und der Querbeschleunigung, sowie die der Lenkgeschwindigkeit.

Die DE 40 11 732 A1 offenbart eine Regeleinrichtung für die Radaufhängung eines Fahrzeugs, die unter Anwendung eines Unschärfe- oder Mehrwertigkeitsreglers optimale Charakteristiken einer Radaufhängung und eines Stabilisators für einen Fahrzeugaufbau durch Regelung von Faktoren, die die Radaufhängungs- und Stabilisator-Charakteristiken beeinflussen, bestimmt.

Auf der Grundlage eines Ähnlichkeitsmaßes entsprechend einer physikalischen Größe, die die Charakteristik der Radaufhängung beeinflußt, und einer Zustandsgröße, die die Bewegung des Fahrzeugaufbaus darstellt, wird unter Anwendung der Unschärfe-Regel eine Dämpfungskraft oder eine Aufhängungs-Federkonstante oder eine Stabilisator-Drehsteifigkeit berechnet. Im Fall einer Erhöhung bleibt dieser Erhöhungszustand für eine vorbestimmte Zeitdauer aufrechterhalten. Das Gleiche gilt für einen niederen Zustand, der ebenfalls für eine vorgegebene Zeit aufrechterhalten wird. Dadurch wird ein unnötiges Schwingen des Stellgliedes verhindert und häufige Änderungen der Radaufhängungs-Charakteristik vermieden, wodurch eine hohe Fahrstabilität zu erwarten ist.

Als physikalische Größen werden z. B. die F'ahrzeugaufbau-Vertikal- und Querbeschleunigungen, die Fahrzeuggeschwindigkeit, die Gaspedalbetätigungs-Geschwindigkeit und die Lenkwinkelgeschwindigkeit verwendet und mit Hilfe der Unschärfe-Regeln wird ein Ähnlichkeitsmaß definiert, welches dann zur Bestimmung einer Bedingung für Komfort und Fahrstabilität des Fahrzeugaufbaus verwendet wird.

In der EP 0 622 255 A1 sind zur Steuerung einer Radaufhängung zwei mit Fuzzy-Logik arbeitende Steuerungen vorgesehen, nämlich erstens eine Komfort-Steuerung und zweitens eine Sicherheits-Steuerung.

Die Komfort-Steuerung wirkt auf die Bewegungen des Fahrzeugaufbaus, die für den Komfort der Passagiere entscheidend sind, und hierfür werden als Eingangsvariable die von entsprechenden Aufnehmern ermittelte Vertikalbeschleunigung und Vertikalgeschwindigkeit des Fahrzeugaufbaus verwendet. Diese Eingangsvariablen werden fuzzifiziert und mit entsprechenden Regeln ausgewertet; das Ergebnis stellt einen für die Funktion des Komforts entsprechenden Vektor dar.

In gleicher Weise wird in der Sicherheits-Steuerung ein Vektor ermittelt, der für die Sicherheit des Fahrzeugs maßgeblich ist; hierfür ist das dynamische Verhalten des Rades relativ zur Fahrbahn entscheidend, weshalb für diese Steuerung als Eingangsvariable die Reifeneindrückung und die Vertikalgeschwindigkeit des Rades gewählt sind.

Aus beiden Vektoren für Sicherheit und Komfort bestimmt eine Überwachungs-Steuerung dann endgültig die Federrate und den Dämpfungskoeffizienten der Radaufhängung. Mit dieser Struktur ist ein Fuzzy-Logik-Verfahren mit zwei Hierarchie-Ebenen beschrieben; mit dem Verfahren lassen sich auch kontinuierlich einstellbare Dämpfer steuern. Zur Verbesserung der Funktion dieser Überwachungs-Steuerung ist es auch möglich, dort noch weitere Eingangsvariable wie die Fahrzeuggeschwindigkeit oder die Fahrzeugbeschleunigung mit zu berücksichtigen.

Der Erfindung liegt deshalb die Aufgabe zugrunde, Niveauregeleinrichtungen, z. B. der eingangs genannten Art, so zu verbessern, daß die Abhängigkeit von festen Parametern reduziert wird.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß sich ein vergleichmäßigtes Verhalten mit sanften Übergängen ergibt. Dabei wirkt sich ein gewählter Parameter nicht gravierend aus, wenn er nicht gleich dem optimalen Wert gesetzt ist; die gesamte Dämpferverstellung wird dadurch unkritischer und das selbst dann, wenn für den Parameter ein Wert gewählt sein sollte, der streng genommen eigentlich "nicht richtig" ist. Ein weiterer Vorteil der Erfindung liegt darin, daß zu ihrer Realisierung keinerlei die Kosten erhöhenden zusätzlichen Hardware-Komponenten erforderlich sind, da die Maßnahmen durch ein Programm realisiert werden.

Die Erfindung hat weiter den Vorteil, daß eine gewichtete Zusammenführung von Größen stattfindet: Für "Wanken" und "Nicken" wird eine Art gewichtete Addition dergestalt durchgeführt, daß das Additionsergebnis der Wirkung der überlagerten Schwingung von "Wanken" und "Nicken" entspricht. Bei dieser gewichteten Addition werden auch die Frequenzen beider Schwinganteile in geeigneter Weise berücksichtigt. Als Beispiel für die Wirkung einer solchen gewichteten Addition sei erwähnt, daß im Falle eines hohen "Wank"-Anteils, der als solcher einen hohen Dämpfungsbedarf nahelegt, ein "Nick"-Anteil mittlerer Größe den Dämpfungsbedarf über das vom Wanken nahegelegte Maß praktisch nicht mehr erhöht.

Die Erfindung wird im folgenden anhand eines Ausführungsbeispiels, das in den Zeichnungen dargestellt ist, näher erläutert.

Dabei zeigen:

Fig. 1    Ein Blockschaltbild bestehend aus Entscheidungs-, Funktions- und Konversions-Blöcken mit zugeordneten linguistischen Variablen;

Fig. 2a    Terme für eine linguistische Eingangsvariable Wankwinkel;

Fig. 2b    Terme für eine linguistische Eingangsvariable WankFrequenzDifferenz;

Fig. 3a    Terme für eine linguistische Eingangsvariable Nickwinkel;

Fig. 3b    Terme für eine linguistische Eingangsvariable NickFrequenzDifferenz;

Fig. 4    Terme für eine linguistische Ausgangsvariable D_Wank_Nick mit Darstellung eines Defuzzifizierungs-Ergebnisses;

Fig. 5a    Terme für eine linguistische Eingangsvariable Daempfung_Vorn;

Fig. 5b    Terme für eine linguistische Ausgangsvariable Strom_Vorn;

Fig. 6    die Vorderachsen-Kennlinie des Schwingungsdämpfer-Stromes über dem Dämpfungsbedarf.

Die aufgeführten Zeichnungen stellen Ausdrucke dar, die mit Hilfe eines Entwicklungswerkzeuges für die unten erläuterte Fuzzy-Technik erstellt worden sind; diese Ausdrucke wurden handschriftlich mit Bezugszeichen versehen.

Neben der unten erläuterten Effektivität für die Realisierung eines Projektes an sich sind also die Entwicklungswerkzeuge der Fuzzy-Technik zusätzlich in der Lage, die gesamte Dokumentation für ein Projekt zu erstellen.

Die Erfindung bezieht sich auf ein luftgefedertes Fahrzeug, bei dem sich der Fahrzeugaufbau über den Fahrzeugachsen durch Luftfederbälge abstützt. Die Luftmengen in den den Fahrzeugaufbau tragenden Luftfederbälgen bestimmen das Niveau des Fahrzeugaufbaus, nämlich seine Höhe über den Fahrzeugachsen.

Das luftgefederte Fahrzeug ist weiter mit einer elektronischen Niveauhöhenregelung ausgerüstet. Hierzu sind an den Luftfederbälgen Stellventile angeordnet, die aufgrund eines elektrischen Stellsignals die Luftmengen in den ihnen zugeordneten Luftfederbälgen verändern, indem sie die Luftfederbälge belüften oder entlüften. Zur Istwert-Erfassung sind Höhensensoren vorgesehen, die die Ist-Abstände zwischen dem Fahrzeugaufbau und den Fahrzeugachsen ermitteln. Zur Regelung des Fahrzeugaufbau-Niveaus ist ein Elektronik-Regler vorgesehen, dem ein Soll-Abstand vorgegeben ist, dem die Ist-Abstände der Höhensensoren zugeführt werden, und der über die Stellventile die Luftmengen in den Luftfederbälgen beeinflußt.

Bei einer Abweichung vom Soll-Abstand verändert der Elektronik-Regler die Luftmenge in einem bestimmten Luftfederbalg derart, daß der Ist-Abstand an dem ihm zugeordneten Sensor gleich dem vorgegebenen Soll-Abstand wird. Der Elektronik-Regler führt diese Niveauregelung für die einzelnen Luftfederbälge aus; er ist als digitaler Regler mit fester Abtastzeit aufgebaut. Zu den durch die Abtastzeit festgelegten Zeitpunkten wird der Meßwert eines Höhensensors abgetastet und gilt bis zum nächsten Abtast-Zeitpunkt als Ist-Abstand des betreffenden Höhensensors.

Bei einem Fahrzeug mit zwei Fahrzeugachsen sind üblicherweise vier Luftfederbälge vorgesehen; ein Luftfederbalg im Bereich des linken Vorderrades der Vorderachse, ein Luftfederbalg an der Vorderachse "rechts", ein Luftfederbalg an der Hinterachse "links" und ein Luftfederbalg an der Hinterachse "rechts" [wenn an den Rädern der Hinterachse statt eines Luftfederbalges ein Paar von Luftfederbälgen angeordnet ist, so wird dieses für den Zweck dieser Betrachtung logisch als ein Luftfederbalg betrachtet]. Da eine ebene Fläche im Raum durch drei Punkte definiert ist, genügt es, zur Niveauregelung der genannten vier Luftfederbälge insgesamt drei Höhensensoren vorzusehen. Üblicherweise sind dies zwei Sensoren an der Hinterachse und ein Sensor an der Vorderachse, wobei die Hinterachsen-Sensoren "links" und "rechts" in der Nähe der Räder angeordnet sind, und sich der Vorderachsen-Sensor etwa in der Mitte der Vorderachse befindet.

Die Schwingungsdämpfer des Fahrzeugs sind verstellbar ausgeführt, indem ihre Dämpfkraft kontinuierlich [d. h. stufenlos] über ein elektrisches Signal im Sinne einer adaptiven Beeinflussung steuerbar ist. Wie üblich, sind die Schwingungsdämpfer an den Fahrzeugachsen einerseits und am Fahrzeugaufbau andererseits befestigt; für das zweiachsige Fahrzeug sind vier Schwingungsdämpfer für jeweils die Räder "links" und "rechts" an der Vorderachse und "links" und "rechts" an der Hinterachse vorgesehen.

Zur Verstellung des Schwingungsdämpfers werden dem Elektronik-Regler Meßwerte von Sensoren zugeführt. Diese Meßwerte werden ausgewertet und es werden Stellgrößen ermittelt, die zur Steuerung der Schwingungsdämpfer vorgesehen sind. Die Auswertung der Meßwerte wird nach dem Verfahren der Fuzzy Logic durchgeführt.

Die Fuzzy Logic erlaubt es, Variable, die als unscharfe Mengen vorliegen, logisch zu verknüpfen und aufgrund des Ergebnisses der Verknüpfung eine Schlußfolgerung zu treffen. Die zu verknüpfenden Variablen, nämlich die Eingangsvariablen, liegen zunächst als physikalische Werte in Form der erwähnten Sensor-Meßwerte vor. Zur Auswertung nach dem Fuzzy-Verfahren werden in einem ersten Schritt die physikalischen Werte der physikalischen Eingangsvariablen in linguistische Werte von linguistischen Eingangsvariablen, die den physikalischen Eingangsvariablen zugeordnet sind, umgewandelt; diesen ersten Schritt bezeichnet man als Fuzzifizierung.

In einem zweiten Schritt werden die linguistischen Eingangsvariablen aufgrund festgelegter logischer Regeln miteinander verknüpft, indem die linguistischen Werte der linguistischen Eingangsvariablen in die Regeln eingesetzt werden. Eine Regel besteht aus einem Bedingungsteil und einem Schlußfolgerungsteil. Die in den Bedingungsteil einer Regel eingesetzten linguistischen Werte bestimmen einen Grad der Erfüllung (das o. g. Ergebnis der Verknüpfung), und dieser Erfüllungs-Grad wird aufgrund des Schlußfolgerungsteils einer linguistischen Variablen (als linguistischer Wert) zugewiesen, die als Ausgangsvariable dient. Als Ergebnis des zweiten Schritts, nämlich der Regelauswertung, liegt also für die Ausgangsvariable ein linguistischer Wert vor.

Ein dritter und letzter Schritt der Auswertung besteht aus der Defuzzifizierung. Mit diesem Schritt wird der linguistische Wert der linguistischen Ausgangsvariablen in einen physikalischen Wert der zugeordneten physikalischen Ausgangsvariablen umgewandelt.

Im zweiten Schritt wird, wie erläutert, der linguistische Wert einer linguistischen Ausgangsvariablen ermittelt; es wird damit eine Entscheidung für die linguistische Ausgangsvariable getroffen. Diese Entscheidung basiert zum ersten auf den linguistischen Werten der linguistischen Eingangsvariablen, zum zweiten auf den Regeln für die Verknüpfung der Eingangsvariablen (Bedingungsteil) und zum dritten auf der Zuweisung des Schlußfolgerungsteils. Zur Verknüpfung von Eingangsvariablen müssen mindestens zwei Variable vorgesehen sein. Die Einheit für die Entscheidung des linguistischen Wertes einer Ausgangsvariablen aufgrund von zwei oder mehr als zwei linguistischen Eingangsvariablen wird hier als Entscheidungs-Block bezeichnet.

Im Folgenden wird die Definition der linguistischen Eingangsvariablen erläutert; dabei wird dargelegt, wie sie aus Meßwerten von Sensoren abgeleitet werden. Ein besonderer Vorteil der Schwingungsdämpfer--Steuerung in Verbindung mit der Niveauregeleinrichtung besteht darin, daß zur Ermittlung eines großen Teils der Eingangsvariablen Einrichtungen mitbenutzt werden, die für die Niveauregelung ohnehin vorgesehen sind. Einige Eingangsvariablen können so ohne jeglichen Mehraufwand implementiert werden, während für andere Eingangsvariablen nur ein geringer Mehraufwand erforderlich ist.

Die den linguistischen Variablen zugrundeliegenden physikalischen Variablen weisen unterschiedliche Einheiten auf. Zur Vereinheitlichung werden die linguistischen Variablen auf geeignete Werte normiert, wodurch sich für diese Variablen dimensionslose Abszissenwerte ergeben. Die Normierung für die einzelnen linguistischen Variablen wird angegeben, da sie für die unten erläuterte Definition von linguistischen Termen erforderlich ist.

Die bei einem Fahrzeug zu dämpfenden Bewegungen bestehen zum einen aus den relativ hochfrequenten Bewegungen des Rades und zum anderen aus den vergleichsweise niederfrequenten Bewegungen des Fahrzeugaufbaus; für beide Arten der Bewegung besteht daher ein Bedarf für eine Dämpfung. Da, im Gegensatz zum "aktiven Fahrwerk", bei der adaptiven Dämpfkraftverstellung nach der Erfindung nicht die Dämpfung der Radbewegung, sondern die Dämpfung der Fahrzeugaufbaubewegung verstellt werden soll, wird der Dämpfungsbedarf aufgrund der Bewegungen des Fahrzeugaufbaus gegenüber den Fahrzeugachsen ermittelt; es sind dies die Veränderungen der Federwege zwischen Fahrzeugachse und Fahrzeugaufbau.

Diese Federwege stellen zugleich die oben erläuterten Ist-Abstände zwischen Fahrzeugaufbau und Fahrzeugachse dar. Die erläuterten drei Höhensensoren für die Niveauregelung werden daher auch für einen zweiten Zweck als Sensor-Meßwerte für die Bestimmung der Aufbaubewegungen benutzt.

Vor ihrer weiteren Verarbeitung werden die Abtast-Meßwerte der Höhensensoren durch einen Bandpaß-Filter mit einer oberen und einer unteren Grenzfrequenz bedämpft. Die untere Grenzfrequenz dient zur Elimination eines stationären Schiefstandes und bewirkt eine stationäre Nullage; mit der oberen Grenzfrequenz werden sowohl die für die Niveauregelung störenden Meßwert-Schwankungen von Abtast-Zeitpunkt zu Abtast-Zeitpunkt aufgrund zufälliger Einflüsse reduziert als auch zur Ermittlung der Aufbaubewegungen die Radschwingungen ausgefiltert. Auf der Grundlage der gefilterten Höhensensor-Meßwerte, nämlich der gefilterten Ist-Abstände, wird in an sich bekannter Weise das "Wanken" und das "Nicken" des Fahrzeugaufbaus bestimmt; der ermittelte Wank:winkel basiert auf einer Umrechnung der Differenz der Ist-Abstände, die von den Höhensensoren links und rechts an der Hinterachse geliefert werden; der ermittelte Nickwinkel basiert auf der Umrechnung der Ist-Abstands-Differenz zwischen dem Mittelwert der Höhensensoren an der Hinterachse und dem Vorderachsen-Sensor.

Nach diesen Berechnungen liegen die Variablen Wankwinkel und Nickwinkel als physikalische Werte vor, sie werden in "counts", d. h. Prozessor-Zähleinheiten, angegeben. Zur Bildung linguistischer Eingangsvariablen werden die "counts" der physikalischen Werte durch eine geeignete Zahl normiert, so daß sich für jeden physikalischen Wert der Variablen ein Abszissenwert der zugeordneten linguistischen Variablen ergibt.

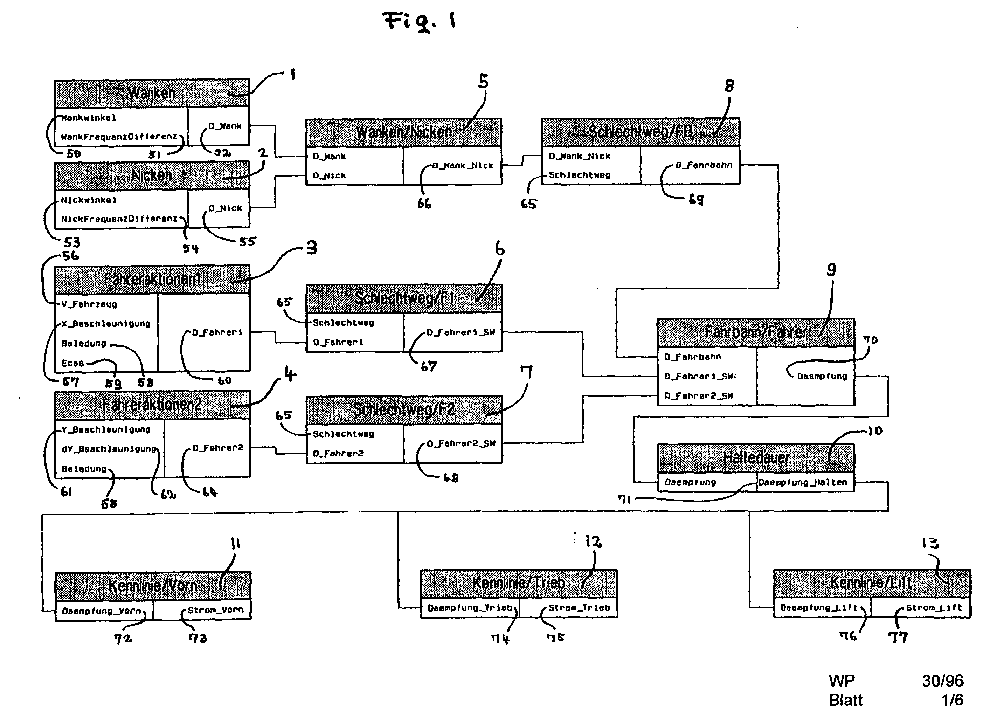

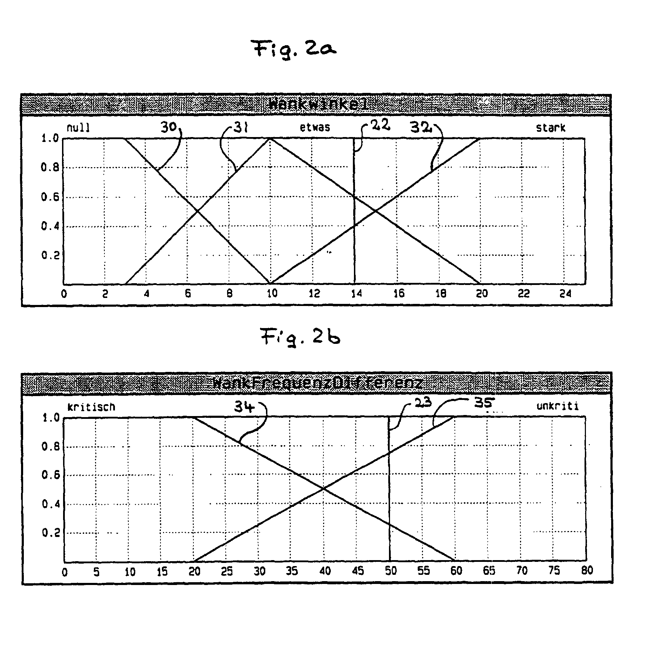

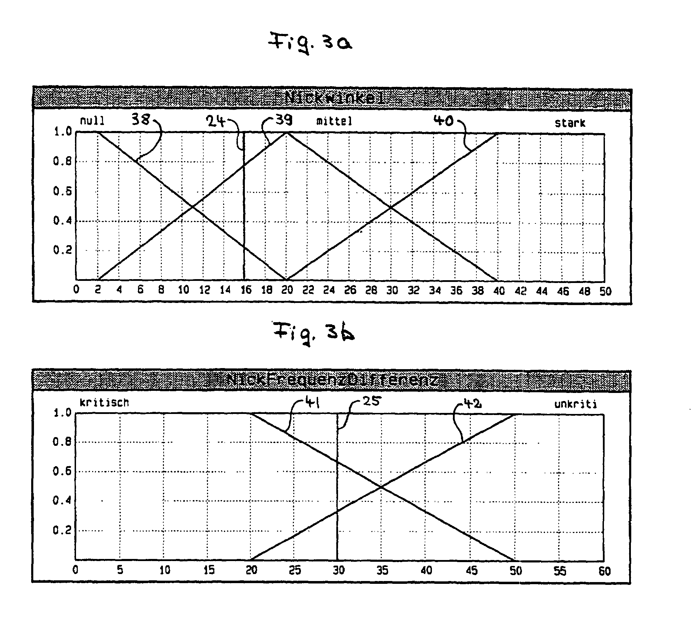

Für die linguistische Variable Wankwinkel (50) nach Fig. 1 ist die Normierung derart gewählt, daß sehr große Wankwinkel einen Abszissenwert von 20 ergeben [vergl. Fig. 2a]; für die linguistische Variable Nickwinkel (53) nach Fig. 1 ist die Normierung so gewählt, daß sehr große Nickwinkel einen Abszissenwert von 40 ergeben [vergl. Fig. 3a].

Für die Ermittlung eines Dämpfungsbedarfes spielt neben der Amplitude auch die Frequenz der zu dämpfenden Schwingung eine Rolle; bei Bewegungen des Fahrzeugaufbaus gefährden vor allem niederfrequente Schwingungen die Fahrstabilität und verringern den Fahrkomfort, weshalb diese Anteile mit Vorrang zu dämpfen sind. Durch Zeitmessung von Halbperioden der gefilterten Ist-Abstände werden die physikalischen Größen der Wankfrequenz und der Nickfrequenz bestimmt.

Bezüglich der Frequenzen ist für die Bestimmung eines Dämpfungsbedarfs nicht der Wert einer Frequenz selbst, sondern die Nähe dieser Frequenz zur Eigenfrequenz von Bedeutung. Nick-Eigenfrequenz und Wank-Eigenfrequenz sind als nahezu feste [und daher beladungsunabhängige] Werte durch die Fahrzeugkonstruktion bestimmt; sie liegen im Elektronik-Regler als gespeicherte Parameter für einen bestimmten Fahrzeugtyp vor; Wank-Eigenfrequenzen liegen im Bereich von 0,8 Hz und Nick-Eigenfrequenzen im Bereich von 1 Hz.

Für Wanken wird aus der ermittelten Größe der Wankfrequenz und dem Parameter der Wank-Eigenfrequenz eine prozentuale Abweichung der WankFrequenzDifferenz gebildet, indem der Betrag der Differenz zwischen Wankfrequenz und Wank-Eigenfrequenz gebildet und dieser Betrag durch die Wank-Eigenfrequenz geteilt wird. Durch die prozentuale Verhältnisbildung ist der Abszissenwert der linguistischen Eingangsvariablen WankFrequenzDifferenz (51) nach Fig. 1 automatisch normiert [vergl. Fig. 2b].

In analoger Weise wird aus der physikalischen Größe der Nickfrequenz und dem Parameter der Nick-Eigenfrequenz die linguistische Eingangsvariable NickFrequenzDifferenz (54) nach Fig. 1 gebildet [vergl. Fig. 3b].

Zur Bestimmung der Fahrzeuggeschwindigkeit wird dem Elektronik-Regler das üblicherweise mit C3 bezeichnete Ausgangssignal [alternative, Hersteller-abhängige Bezeichnungen sind z.B. B7, D3] des Fahrtenschreibers [Tachograph-Ausgang] zugeführt. Das C3-Signal stellt ein pulsweitenmoduliertes Signal dar, und die Geschwindigkeit ergibt sich durch Auswertung des Tastverhältnisses. Die Auswertung ergibt den physikalische Wert der Fahrzeuggeschwindigkeit direkt in der Einheit km/h; der Abszissenwert der zugeordneten linguistischen Eingangsvariablen V_Fahrzeug (56) nach Fig. 1 ist direkt in km/h normiert.

Die Beschleunigung des Fahrzeugs ist bei einer Geschwindigkeits-Erhöhung durch den Motor positiv und bei einer Geschwindigkeits-Verringerung durch Bremsen negativ. Beim positiven Beschleunigen wird das Fahrpedal über die in einer bestimmten Fahrsituation zur Aufrechterhaltung einer konstanten Geschwindigkeit erforderliche Stellung hinaus betätigt: Das Fahrpedal wird "niedergetreten". Die Beschleunigung ist proportional zum Momenten-Überschuß, und dieser ist vom Gradienten der Fahrpedal-Betätigung abhängig ["Geschwindigkeit" des Niedertretens]. Durch Auswertung der Bewegung des Fahrpedals [, nämlich durch die Auswertung des Fahrpedal-Potentiometers,] ermittelt der Elektronik-Regler ein Maß für die Beschleunigung. Ist im Fahrzeug eine elektronische Motorregelung mit Datenbusschnittstelle vorhanden, so besteht die alternative Möglichkeit, daß dem Elektronik-Regler über den [CAN]-Datenbus das die Beschleunigung des Fahrzeugs bestimmende Motormoment direkt mitgeteilt wird.

Für negative Beschleunigungen ist das Bremsmoment maßgebend, das durch den Bremsdruck in den Bremszylindern bestimmt ist. Es besteht grundsätzlich die Möglichkeit, den Bremsdruck auszuwerten, was jedoch vergleichsweise aufwendig ist. Da der Bremsdruck [etwas verzögert] der Vorgabe durch das Bremspedal folgt, kann die Bremspedal-Vorgabe als Maß für das Bremsmoment benutzt werden; die Vorgabe besteht aus dem Signal des an das Bremspedal angeschlossenen Bremswertgebers. Das Signal des Bremswertgebers wird als Maß für das Bremsmoment benutzt.

Die Signalauswertung für positive und negative Beschleunigungen führt zu einem physikalischen Wert X_Beschleunigung, der sowohl positive wie negative Werte annehmen kann. Für die dieser physikalischen Größe zugeordnete linguistische Eingangsvariable X_Beschleunigung (57) nach Fig. 1 wird eine Normierung derart vorgenommen, daß bei maximalem negativen Moment der Abszissenwert -100, bei einer Beschleunigung von 0 der Abszissenwert 0 und bei dem maximalen positiven Moment der Abszissenwert 100 gegeben ist; durch die Unterschiedlichkeit der Momenten-Maße für positive und negative Beschleunigungen wird die Normierung stückweise separat für positive und negative Beschleunigungen vorgenommen.

Die Beladung des Fahrzeugs wird aufgrund des Luftdrucks in den Luftfederbälgen ermittelt. Vorzugsweise an der Hinterachse, der Achse, auf die sich Beladungsveränderungen in erster Linie auswirken, sind Drucksensoren zur Druckermittlung vorgesehen. Für die Drucksensoren sind verschiedene Konfigurationen denkbar; es können einmal an den Luftfederbälgen links und rechts der Hinterachse je ein Drucksensor vorgesehen werden, und der Mittelwert des Drucks beider Luftfederbälge dient als Maß für die Beladung; alternativ kann ein Drucksensor über ein Wechselventil an beide Luftfederbälge angeschlossen sein, wobei der höhere von beiden Drücken ("Select High") als Maß für die Beladung gilt, oder es ist alternativ möglich, nur an einem der beiden Luftfederbälge einen Sensor vorzusehen, dessen Meßwert als Maß für die Beladung benutzt wird. Bei allen Alternativen wird schließlich ein Balgdruck als Maß für die Beladung ermittelt. Dieser physikalische Wert der Beladung wird derart normiert, daß sich bei maximaler Zuladung für das Fahrzeug als Abszissenwert der zugeordneten linguistischen Eingangsvariablen Beladung (58) nach Fig. 1 ein Wert von 200 ergibt.

Die linguistische Eingangsvariable Ecas [Electronically Controlled Air Suspension] wird vom Zustand der Regelung abgeleitet, je nachdem, ob diese aus- oder eingeschaltet ist. Der Zustand der Aus- bzw. Einschaltung stellt zwar eine Bool'sche Variable mit zwei scharfen Zuständen ["nein" bzw. "ja"] dar, diese Bool'sche Variable wird jedoch in eine linguistische Eingangsvariable Ecas (59) nach Fig. 1 bewußt deshalb umgewandelt, um den Einfluß einer nicht aktiven bzw. aktiven Regelung auf die Dämpferkraftbestimmung in die Fuzzy-Regeln für Entscheidungsblock (3) nach Fig. 1 aufzunehmen. Der Abszissenwert für die linguistische Variable Ecas beträgt je nach Schaltzustand 0 oder 1.

Die Bestimmung einer Querbeschleunigung des Fahrzeugs erfolgt unter Verwendung der Raddrehzahlen der Vorderräder. Unter der Annahme, daß der Kurvenradius groß gegenüber der Spurweite des Fahrzeugs ist, ergibt sich die Querbeschleunigung nach der Formel

$$a_{quer} = \frac{1}{f} \cdot \Delta V \cdot V_{mittel},$$

wobei für die angegebenen Größen folgende Werte einzusetzen sind:

f   die Spurweite in der Einheit m

$V_{mittel}$   die mittlere Abrollgeschwindigkeit der Vorderräder in der Einheit m/s

$\Delta V$   die Differenz-Abrollgeschwindigkeit der Vorderräder in der Einheit m/s

Für die Berechnung der Abrollgeschwindigkeiten wird dabei der Abrollumfang der Reifen zugrundegelegt. Der Abrollumfang eines Reifens ist aus verschiedenen Gründen jedoch kein fester Wert. Vom Reifenhersteller angegebene Werte des Abrollumfanges sind mit einer gewissen Toleranzbreite versehen, und während des Betriebes können durch Luftdruckunterschiede, unterschiedlichen Verschleiß und Fehler in der Achsgeometrie weitere Abweichungen auftreten. Um diese Störeinflüsse zu kompensieren, muß für die Berechnung ein permanenter Reifenabgleich der Werte des Abrollumfangs erfolgen.

Zur Bestimmung der Abrollgeschwindigkeiten wird der durch den Reifenabgleich korrigierte Abrollumfang der Reifen und die Drehgeschwindigkeit der Vorderräder benutzt. Diese Drehgeschwindigkeiten werden mit Hilfe der Antiblockiereinrichtung (ABS) ermittelt.

Über ABS-Sensoren werden die Raddrehzahlen der Vorderräder laufend festgestellt und dem Elektronik-Regler via des CAN-Datenbusses übermittelt; das Produkt von Drehzahl [Einheit 1/s] und Abrollumfang ergibt die Abrollgeschwindigkeit.

Für die Beeinflussung des Dämpfungsbedarfes von Schwingungsdämpfern ist etwa der Bereich einer Querbeschleunigung

von 0.6 bis 3 $\frac{m}{s^2}$

von praktischer Bedeutung; größere Werte brauchen nicht berücksichtigt zu werden, da die härteste Kennung ohnehin schon eingeschaltet ist und sich ein beladenes Fahrzeug dann sogar schon im Grenzbereich bewegt.

Die physikalische Größe der Querbeschleunigung wird nach dem beschriebenen Verfahren als Betrag ermittelt. Die dieser Größe zugeordnete linguistische Eingangsvariable Y_Beschleunigung (61) nach Fig. 1 wird durch eine Normierung auf den Beschleunigungs-Wert von 0.1 m/s$^2$ erzeugt.

Als Maß für die zeitliche Änderung der Querbeschleunigung dient der Differentialquotient dieser Größe; er wird in jedem Programmumlauf (ca. 25 ms) aus den Querbeschleunigungs-Unterschieden mit einer Zeitbasis von 0.5 s gebildet:

$$\dot{a}_{quer} = \frac{\Delta a_{quer}}{\Delta t}$$

Für die dieser Größe zugeordneten linguistischen Eingangsvariable dY_Beschleunigung (62) nach Fig. 1 wird eine Betragsbildung durchgeführt und eine Normierung auf den Wert 0.01 (m/s$^2$)/s vorgenommen.

Aufgrund der Aufbaubeschleunigung wird eine Schlechtweg-Kenngröße ermittelt. Unter dem Begriff "Aufbaubeschleunigung" wird die Beschleunigung des Fahrzeugaufbaus verstanden, die er bei der Veränderung der Federwege erfährt; sie wird durch zweifache Differentiation eines Ist-Abstandes gewonnen, wobei der Ist-Abstand eines Höhensensors, z. B. des Höhensensors am rechten Hinterrad, herangezogen wird.

Entsprechend dem Abtast-Prinzip erhält man zu jedem Abtast-Zeitpunkt einen bestimmten Wert der Aufbaubeschleunigung, der im Prozessor des Elektronik-Reglers in Form von "counts", d. h. Prozessor-Zähleinheiten, angegeben wird.

Zur Bestimmung der Schlechtweg-Kenngröße werden zunächst aus allen Aufbaubeschleunigungs-Werten diejenigen ausgesucht, die betragsmäßig größer als eine vorgegebene Mindestbeschleunigung sind [erstes Selektionskriterium]; wenn z. B. die Mindestbeschleunigung zu 3 "counts" festgelegt ist, werden alle positiven Aufbaubeschleunigungen von mehr als 3 "counts" und alle negativen Aufbaubeschleunigungen von kleiner als minus 3 "counts", als außerhalb dieses Unempfindlichkeits-Bandes liegend, zunächst ausgewählt.

Von diesen so ausgewählten Beschleunigungs-Meßwerten werden nach einem zweiten Selektionskriterium diejenigen Meßpunkte bestimmt, die sich im Vergleich zum vorhergehenden Meßpunkt um mindestens einen fest vorgegebenen Beschleunigungs-Betrag unterscheiden; der Mindest-Beschleunigungs-Betrag ist z. B. durch 3 "counts" festgelegt.

Es wird ein aktuelles Zeitfenster festgelegter Länge gebildet, dessen zeitliche Länge z. B. 20 Abtastzeiten beträgt. Die jüngsten aller vergangenen, auf die erläuterte Weise ausgewählten Beschleunigungs-Meßwerte [, im Beispiel sind dies ausgewählte Beschleunigungs-Meßwerte, die zu den jüngst-vergangenen 20 Abtast-Zeitpunkten aufgetreten sind,] werden zu einem Summen-Wert aufaddiert, welcher die Schlechtweg-Kenngröße darstellt.

Die zugeordnete linguistische Eingangsvariable Schlechtweg (65) nach Fig. 1 wird durch Normierung der Schlechtweg-Kenngröße auf die Zahl 255 [, die MaximalZahl bei der gewählten 8-bit-Quantisierung,] gebildet, damit ihr Wertebereich zwischen der (Prozent-) Zahl 0 und der Zahl 100 liegt.

Für einen oben erwähnten Entscheidungs-Block besteht die Möglichkeit, alle beschriebenen Eingangsvariablen (50), (51), (53), (54), (56), (57), (58), (59), (61), (62), (65) als Eingangsvariable vorzusehen. Die linguistische Ausgangsvariable würde dann aus einer Variablen bestehen, die dem ermittelten Dämpfungsbedarf unter Berücksichtigung aller Eingangsvariablen entspricht. Bei einer solchen Lösung wären jedoch als Regeln insgesamt alle Regeln aufzunehmen, die zwischen den Eingangsvariablen untereinander bestehen. Es müßten daher sehr viele Regeln aufgenommen werden, was als solches zum einen unübersichtlich ist und zum anderen kaum Rückschlüsse auf die Veränderung des ermittelten Dämpfungsbedarfes aufgrund der Modifizierung einer ganz bestimmten Eingangsvariablen zuläßt, da alle Eingangsvariablen zugleich das Ergebnis beeinflussen.

Es ist daher vorteilhaft, Entscheidungen in mehreren bis vielen Entscheidungs-Blöcken vorzusehen, die als solche nur wenige Eingangsvariablen aufweisen. Weist ein Entscheidungs-Block nur zwei Eingangsvariablen auf, so ist der gegenseitige Einfluß am besten nachzuvollziehen; daher ist ein Entscheidungs-Block mit zwei Eingangsvariablen immer dann sinnvoll einzusetzen, wenn in einer Anwendung eine Teilentscheidung aufgrund von nur zwei Eingangsvariablen einen technischen Sinn ergibt.

Wenn für eine Entscheidung mehr als zwei Eingangsvariablen erforderlich sind, so ist es aus den obengenannten Gründen sinnvoll, die Anzahl der Eingangsvariablen nach Möglichkeit auf eine Zahl von maximal fünf zu begrenzen.

Für komplexe Entscheidungen ist es vorteilhaft, statt Entscheidungs-Blöcken mit vielen Eingangsvariablen eine hierarchisch ausgebildete Baumstruktur aus Entscheidungs-Blöcken mit jeweils einer kleinen Anzahl von Eingangsvariablen vorzusehen.

Entsprechend Fig. 1 sind in einer ersten Hierarchie-Ebene, welche die unterste Hierarchie-Ebene bildet, folgende Entscheidungs-Blöcke vorgesehen, deren Eingangsvariablen, wie erläutert, direkt aus der Sensorik des Fahrzeuges abgeleitet sind:

Ein Entscheidungs-Block "Wanken" (1) bestimmt aus den zwei Eingangsvariablen Wankwinkel (50) und WankFrequenzDifferenz (51) eine Ausgangsvariable D_Wank (52), welche den Dämpfungsbedarf aufgrund des Wankens beschreibt;

ein Entscheidungs-Block "Nicken" (2) bestimmt aus den zwei Eingangsvariablen Nickwinkel (53) und NickFrequenzDifferenz (54) eine Ausgangsvariable D_Nick (55), welche den Dämpfungsbedarf aufgrund des Nickens beschreibt;

ein Entscheidungs-Block "Fahreraktionen1" (3) bestimmt aus den vier Eingangsvariablen V_Fahrzeug (56), X_Beschleunigung (57), Beladung (58) und Ecas (59) eine Ausgangsvariable D_Fahrer1 (60), welche den Dämpfungsbedarf aufgrund der Aktionen vom Typ 1 des Fahrers beschreibt;

ein Entscheidungs-Block "Fahreraktionen2" (4) bestimmt aus den drei Eingangsvariablen Y_Beschleunigung (61), dY_Beschleunigung (62) und Beladung (58) eine Ausgangsvariable D_Fahrer2 (64), welche den Dämpfungsbedarf aufgrund der Aktionen vom Typ 2 des Fahrers beschreibt.

Auf der zweiten, der gegenüber der ersten Hierarchie-Ebene nächsthöheren Ebene, sind folgende Entscheidungs-Blöcke vorgesehen:

Ein Entscheidungs-Block "Wanken/Nicken" (5) bestimmt aus den beiden ihm aus den Entscheidungs-Blöcken (1) und (2) zugeführten Variablen D_Wank (52) und D_Nick (55) eine Ausgangsvariable D_Wank_Nick (66), welche den Dämpfungsbedarf aufgrund der Kombination von Wanken und Nicken beschreibt;

ein Entscheidungs-Block "Schlechtweg/F1" (6) bestimmt aus der Eingangsvariablen Schlechtweg (65) und der vom Entscheidungs-Block (3) zugeführten Variablen D_Fahrer1 (60) eine Ausgangsvariable D_Fahrer1_SW (67), welche den Dämpfungsbedarf aufgrund der Kombination der Fahreraktionen vom Typ 1 und der Schlechtweg-Kenngröße beschreibt.

ein Entscheidungs-Block "Schlechtweg/F2" (7) bestimmt aus der Eingangsvariablen Schlechtweg (65) und der vom Entscheidungs-Block (4) zugeführten Variablen D_Fahrer2 (64) eine Ausgangsvariable D_Fahrer2_SW (68), welche den Dämpfungsbedarf aufgrund der Kombination der Fahreraktionen vom Typ 2 und der Schlechtweg-Kenngröße beschreibt.

In der dritten Hierarchie-Ebene bestimmt ein Entscheidungs-Block "Schlechtweg/FB" (8) aus der Eingangsvariablen Schlechtweg (65) und der vom Entscheidungs-Block (5) zugeführten Variablen D_Wank_Nick (66) eine Ausgangsvariable D_Fahrbahn (69), welche den Dämpfungsbedarf aufgrund der Kombination aller Eigenschaften der Fahrbahn beschreibt.

In der vierten und obersten Hierarchie-Ebene bestimmt ein Entscheidungs-Block "Fahrbahn/Fahrer" (9) aus den vom Entscheidungs-Block (8) zugeführten Variablen D_Fahrbahn (69), aus der vom Entscheidungs-Block (6) zugeführten Variablen D_Fahrer1_SW (67) und aus der vom Entscheidungs-Block (7) zugeführten Variablen D_Fahrer2_SW (68) die Ausgangsvariable Daempfung (70). Mit der Variablen Daempfung (70) ist ein Dämpfungsbedarf bestimmt, bei dem die Entscheidungen aller Entscheidungs-Blöcke in den zu der vierten Ebene untergeordneten Hierarchie-Ebenen in geeigneter Weise berücksichtigt sind; aufgrund dieses Dämpfungsbedarfes werden die Einstellungen an den Schwingungsdämpfern des Fahrzeugs vorgenommen.

Für eine linguistische Variable werden Terme definiert, die ihre möglichen Werte darstellen. Die Terme stellen sprachliche Bezeichnungen für die Größen der entsprechenden physikalischen Variablen dar. Für eine linguistische Variable werden mindestens zwei Terme definiert.

Ist die linguistische Variable eine Eingangsvariable, so müssen die Terme zur Bereichs-Abdeckung überlappend definiert werden: Für die Terme werden Zugehörigkeitsfunktionen festgelegt, die sich über den gesamten Größenbereich der zugeordneten physikalischen Eingangsvariablen überlappen.

Ist die linguistische Variable eine [zu einem bestimmten Entscheidungs-Block gehörende] Ausgangsvariable, so wird unterschieden, ob diese Variable als interne Variable zur Eingabe für einen weiteren Entscheidungs-Block dient, oder ob sie die Ausgangsvariable eines letzten Entscheidungs-Blockes darstellt, die zur Defuzzifizierung in einen physikalischen Wert vorgesehen ist.

Im Falle der Ausgangsvariablen als interne Variable besteht die Termfestlegung aus der Bestimmung der Namen für die linguistischen Terme.

Im Falle der zu defuzzifizierenden Ausgangsvariablen ist dagegen neben der Bestimmung der Namen für die linguistischen Terme auch die Festlegung von Zugehörigkeitsfunktionen erforderlich. Im Gegensatz zum Fall der Eingangsvariablen ist hier eine Überlappung der linguistischen Terme nicht erforderlich.

Im Anwendungsbeispiel wird bei der Festlegung von Zugehörigkeitsfunktionen auf Standard-Zugehörigkeitsfunktionen zurückgegriffen: Es werden die Zugehörigkeitsfunktionen vom Z-Typ, vom Lambda-Typ, vom S-Typ und vom Pi-Typ verwendet.

Die Zugehörigkeitsfunktion für einen Term beschreibt den Grad, mit dem eine physikalische Größe zu dem Term gehört, und zwar in Form einer dimensionslosen Zahl, die zwischen 0 und 1 liegt.

Eine Zugehörigkeitsfunktion vom Z-Typ ist durch zwei charakteristische Abszissenwerte, einen Wert A und einen Wert B bestimmt. Für alle Abszissenwerte kleiner oder gleich A ist der Grad gleich 1, für alle Abszissenwerte größer oder gleich B ist der Grad gleich 0, und für alle Abszissenwerte zwischen A und B wird die Zugehörigkeitsfunktion durch das Geradenstück zwischen dem Punkt des Grades 1 am Abzissenwert A und dem Punkt des Grades 0 am Abszissenwert B gebildet.

Eine Zugehörigkeitsfunktion vom Lambda-Typ ist durch drei charakteristische Abszissenwerte, einen Wert C, einen Wert D und einen Wert E, bestimmt. Für einen Abszissenwert gleich D ist der Grad gleich 1, für alle Abszissenwerte kleiner oder gleich C und für alle Abszissenwerte größer oder gleich E ist der Grad gleich 0, für alle Abszissenwerte zwischen C und D wird die Zugehörigkeitsfunktion durch das Geradenstück zwischen dem Punkt des Grades 0 am Abszissenwert C und dem Punkt des Grades 1 am Abszissenwert D gebildet, und für alle Abszissenwerte zwischen D und E wird die Zugehörigkeitsfunktion durch das Geradenstück zwischen dem Punkt des Grades 1 am Abszissenwert D und dem Punkt des Grades 0 am Abszissenwert E gebildet.

Eine Zugehörigkeitsfunktion vom S-Typ ist: durch zwei charakteristische Abszissenwerte, einen Wert F und einen Wert G, bestimmt. Für alle Abszissenwerte kleiner oder gleich F ist der Grad gleich 0, für alle Abszissenwerte größer oder gleich G ist der Grad gleich 1, und für alle Abszissenwerte zwischen F und G wird die Zugehörigkeitsfunktion durch das Geradenstück zwischen dem Punkt des Grades 0 am Abzissenwert F und dem Punkt des Grades 1 am Abszissenwert G gebildet.

Eine Zugehörigkeitsfunktion vom Pi-Typ ist durch vier charakteristische Abszissenwerte, einen Wert H, einen Wert K, einen Wert L und einen Wert M bestimmt. Für alle Abszissenwerte, welche größer oder gleich K und kleiner oder gleich L sind, ist der Grad gleich 1, für alle Abszissenwerte kleiner oder gleich H und für alle Abszissenwerte größer oder gleich M ist der Grad gleich 0, für alle Abszissenwerte zwischen H und. K wird die Zugehörigkeitsfunktion durch das Geradenstück zwischen dem Punkt des Grades 0 am Abzissenwert H und dem Punkt des Grades 1 am Abszissenwert K gebildet, und für alle Abszissenwerte zwischen L und M wird die Zugehörigkeitsfunktion durch das Geradenstück zwischen dem Punkt des Grades 1 am Abzissenwert L und dem Punkt des Grades 0 am Abszissenwert M gebildet.

Für die linguistische Variable Wankwinkel (50) als Eingangsvariable für Entscheidungs-Block (1) nach Fig. 1 sind entsprechend Fig. 2a folgende linguistische Terme definiert:

Ein Term null (30) mit Zugehörigkeitsfunktion vom Z-Typ mit einem Wert A von 3 und einem Wert B von 10;
ein Term etwas (31) mit Zugehörigkeitsfunktion vom Lambda-Typ mit einem Wert D von 10, einem Wert C von 3 und einem Wert E von 20; ein Term stark (32) mit Zugehörigkeitsfunktion vom S-Typ mit einem Wert F von 10 und einem Wert G von 20.

Für die linguistische Variable WankFrequenz-Differenz (51) als Eingangsvariable für Entscheidungs-Block (1) nach Fig. 1 sind entsprechend Fig. 2b folgende linguistische Terme definiert:

Ein Term kritisch (33) mit Zugehörigkeitsfunktion vom Z-Typ mit einem Wert A von 20 und einem Wert B von 60;

ein Term unkritisch (34) mit Zugehörigkeitsfunktion vom S-Typ mit einem Wert F von 20 und einem Wert G von 60;

Für die linguistische Variable D_Wank (52) als interne Ausgangsvariable für Entscheidungs-Block (1) nach Fig. 1 sind linguistische Terme mit folgenden Namen definiert:

weich
mittel
hart

Für die linguistische Variable Nickwinkel (53) als Eingangsvariable für Entscheidungs-Block (2) nach Fig. 1 sind entsprechend Fig. 3a folgende linguistische Terme definiert:

Ein Term null (38) mit Zugehörigkeitsfunktion vom Z-Typ mit einem Wert A von 2 und einem Wert B von 20;

ein Term mittel (39) mit Zugehörigkeitsfunktion vom Lambda-Typ mit einem Wert D von 20, einem Wert C von 2 und einem Wert E von 40;

ein Term stark (40) mit Zugehörigkeitsfunktion vom S-Typ mit einem Wert F von 20 und einem Wert G von 40.

Für die linguistische Variable NickFrequenz-Differenz (54) als Eingangsvariable für Entscheidungs-Block (2) nach Fig. 1 sind entsprechend Fig. 3b folgende linguistische Terme definiert:

Ein Term kritisch (41) mit Zugehörigkeitsfunktion vom Z-Typ mit einem Wert A von 20 und einem Wert B von 50;

ein Term unkritisch (42) mit Zugehörigkeitsfunktion vom S-Typ mit einem Wert F von 20 und einem Wert G von 50;

Für die linguistische Variable D_Nick (55) als interne Ausgangsvariable für Entscheidungs-Block (2) nach Fig. 1 sind linguistische Terme mit folgenden Namen definiert:

weich
mittel
hart

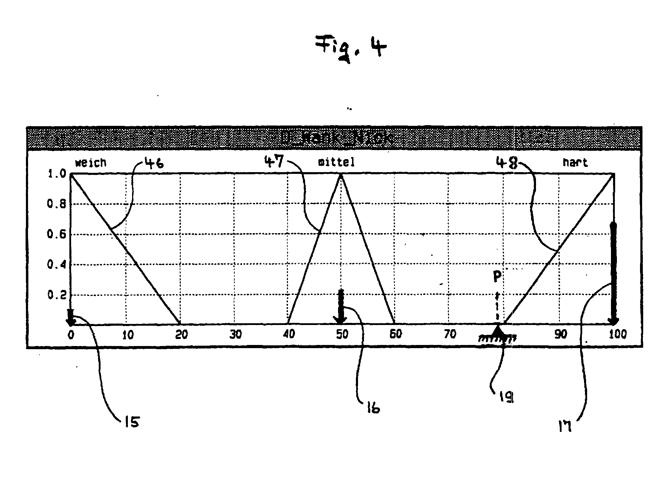

Für die linguistische Variable D_Wank_Nick (66) als [wie unten erläutert] zu defuzzifizierende Ausgangsvariable von Entscheidungs-Block (5) nach Fig. 1 sind entsprechend Fig. 4 folgende linguistische Terme definiert:

Ein Term weich (46) mit Zugehörigkeitsfunktion vom Z-Typ mit einem Wert A von 0 und einem Wert B von 20;

ein Term mittel (47) mit Zugehörigkeitsfunktion vom Lambda-Typ mit einem Wert D von 50, einem Wert C von 40 und einem Wert E von 60;

ein Term hart (48) mit Zugehörigkeitsfunktion vom S-Typ mit einem Wert F von 80 und einem Wert G von 100.

Wie oben erläutert, bestehen die Regeln im Fuzzy-Verfahren aus einem Bedingungsteil und einem Schlußfolgerungsteil. Der Bedingungsteil beginnt mit der Programmanweisung WENN, und die Verknüpfung von Variablen in diesem Teil erfolgt unter Verwendung von Fuzzy-Operatoren. Der Schlußfolgerungsteil einer Regel beginnt mit der Programmanweisung DANN.

In den Regeln werden für eine linguistische Variable sowohl im Bedingungs- als auch im Schlußfolgerungsteil die für diese Variable definierten linguistischen Terme verwendet.

Nachstehend sind die Regeln für die Entscheidungs-Blöcke (1, 2, 5) nach Fig. 1 erläutert. Für die UND-Verknüpfungen im Bedingungsteil der Regeln ist der Fuzzy-Produktoperator vorgesehen.

Für Entscheidungs-Block (1) gelten folgende Regeln:

WENN WankFrequenzDifferenz = kritisch UND Wankwinkel = null DANN D_Wank = weich ;

WENN WankFrequenzDifferenz = kritisch UND Wankwinkel = etwas DANN D_Wank = 0.2 • mittel ;

WENN WankFrequenzDifferenz = kritisch UND Wankwinkel = etwas DANN D_Wank = 0.8 · hart ;

WENN WankFrequenzDifferenz = kritisch UND Wankwinkel = stark DANN D_Wank = hart ;

WENN WankFrequenzDifferenz = unkritisch UND Wankwinkel = null DANN D_Wank = weich ;

WENN WankFrequenzDifferenz = unkritisch UND Wankwinkel = etwas DANN D_Wank = 0.5 • weich ;

WENN WankFrequenzDifferenz = unkritisch UND Wankwinkel = etwas DANN D_Wank = 0.5 • mittel ;

WENN WankFrequenzDifferenz = unkritisch UND Wankwinkel = stark DANN D_Wank = hart .

Für Entscheidungs-Block (2) gelten folgende Regeln:

WENN NickFrequenzDifferenz = kritisch UND Nickwinkel = null DANN D_Nick = weich ;

WENN NickFrequenzDifferenz = kritisch UND Nickwinkel = mittel DANN D_Nick = 0.5 · mittel ;

WENN NickFrequenzDifferenz = kritisch UND Nickwinkel = mittel DANN D_Nick = 0.5 · hart ;

WENN NickFrequenzDifferenz = kritisch UND Nickwinkel = stark DANN D_Nick = hart ;

WENN NickFrequenzDifferenz = unkritisch UND Nickwinkel = null DANN D_Nick = weich ;

WENN NickFrequenzDifferenz = unkritisch UND Nickwinkel = mittel DANN D_Nick = 0.8 · weich ;

WENN NickFrequenzDifferenz = unkritisch UND Nickwinkel = mittel DANN D_Nick = 0.2 · mittel ;

WENN NickFrequenzDifferenz = unkritisch UND Nickwinkel = stark DANN D_Nick = 0.5 · mittel;

WENN NickFrequenzDifferenz = unkritisch UND Nickwinkel = stark DANN D_Nick = 0.5 · hart .

Für Entscheidungs-Block (5) gelten folgende Regeln:

WENN D_Nick = weich UND D_Wank = weich DANN D_Wank_Nick = weich ;

WENN D_Nick = weich UND D_Wank = mittel DANN D_Wank_Nick = mittel ;

WENN D_Nick = weich UND D_Wank = hart DANN D_Wank_Nick = hart ;

WENN D_Nick = mittel UND D_Wank = weich DANN D_Wank_Nick = mittel ;

WENN D_Nick = mittel UND D_Wank = mittel DANN D_Wank_Nick = 0.7 · mittel ;

WENN D_Nick = mittel UND D_Wank = mittel DANN D_Wank_Nick = 0.3 · hart ;

WENN D_Nick = mittel UND D_Wank = hart DANN D_Wank_Nick = hart ;

WENN D_Nick = hart UND D_Wank = weich DANN D_Wank_Nick = hart .

WENN D_Nick = hart UND D_Wank = mittel DANN D_Wank_Nick = hart;

WENN D_Nick = hart UND D_Wank = hart DANN D_Wank_Nick = hart ;

Die Auswertung nach dem Fuzzy-Verfahren wird am Beispiel der Entscheidungs-Blöcke (1, 2, 5) erläutert, wc bei für die physikalischen Werte der Eingangsvariablen folgende Werte zugrundegelegt werden:

Wankwinkel = 14
WankFrequenzDifferenz = 50
Nickwinkel = 16
NickFrequenzDifferenz = 30

Bei der Fuzzifizierung werden, wie erwähnt, aus physikalischen Werten linguistische Werte ermittelt; bei diesem Schritt wird für jeden Term der Variablen ein Wahrheitsgrad ermittelt, der sich aufgrund des physikalischen Wertes und der für diesen Term definierten Zugehörigkeitsfunktion ergibt.
Für die Eingangsvariable Wankwinkel ergeben sich die Wahrheitsgrade der Terme durch die Schnittpunkte der Geraden (22) nach Fig. 2a des Abszissenwertes Wankwinkel = 14 mit den Zugehörigkeitsfunktionen der Terme:

null = 0
etwas = 0.60
stark = 0.40

Für die Eingangsvariable WankFrequenzDifferenz ergeben sich die Wahrheitsgrade der Terme durch die Schnittpunkte der Geraden (23) nach Fig. 2b des Abszissenwertes WankFrequenzDifferenz = 50 mit den Zugehörigkeitsfunktionen der Terme:

kritisch = 0.25
unkritisch= 0.75

Für die Eingangsvariable Nickwinkel ergeben sich die Wahrheitsgrade der Terme durch die Schnittpunkte der Geraden (24) nach Fig. 3a des Abszissenwertes Nickwinkel = 16 mit den Zugehörigkeitsfunktionen der Terme:

null = 0.22

mittel = 0.78
stark = 0

Für die Eingangsvariable MickFrequenzDifferenz ergeben sich die Wahrheitsgrade der Terme durch die Schnittpunkte der Geraden (25) nach Fig. 3b des Abszissenwertes NickFrequenzDifferenz = 30 mit den Zugehörigkeitsfunktionen der Terme:

kritisch = 0.67
unkritisch= 0.33

Durch Einsetzen der Wahrheitsgrade von Termen von Eingangsvariablen in den Bedingungsteil einer Regel wird ein Grad der Erfüllung berechnet, dieser Grad wird entsprechend dem Schlußfolgerungsteil der Regel einem Term der Ausgangsvariablen zugewiesen. Indem man diese Operation Regel für Regel durchführt, erhält man pro Regel entsprechend dem Schlußfolgerungsteil einen Anteil an einem Term der Ausgangsvariablen.

Wenn nur eine Regel einen Term der Ausgangsvariablen beeinflußt, so ist der Anteil dieser Regel gleich dem Erfüllungsgrad selbst.

Beeinflussen mehrere Regeln einen Term der Ausgangsvariablen, so werden die Anteile über Operatoren verknüpft, wobei im Anwendungsbeispiel für die Verknüpfung der Summenoperator vorgesehen ist. Der gesamte Erfüllungsgrad eines Terms besteht dann also aus der auf die Zahl 1 begrenzten Summe aller Anteile an diesem Term.

Bei Durchführung der Regeln für Entscheidungs-Block (1) in der Reihenfolge, wie die Regeln aufgeführt sind, ergeben sich die Anteile der Terme der Ausgangsvariablen D_Wank zu:

weich: $(0.25 \cdot 0) \cdot 1 = 0$
mittel: $(0.25 \cdot 0.6) \cdot 0.2 = 0.030$
hart: $(0.25 \cdot 0.6) \cdot 0.8 = 0.120$
hart: $(0.25 \cdot 0.40) \cdot 1 = 0.100$
weich: $(0.75 \cdot 0) \cdot 1 = 0$
weich: $(0.75 \cdot 0.6) \cdot 0.5 = 0.225$
mittel: $(0.75 \cdot 0.6) \cdot 0.5 = 0.225$
hart: $(0.75 \cdot 0.4) \cdot 1 = 0.300$

Die Terme der Ausgangsvariablen D_Wank ergeben sich wie erläutert durch Summierung ihrer Anteile:

weich = 0 + 0 + 0.225 = 0.225
mittel = 0.030 + 0.225 = 0.255
hart = 0.120 + 0.100 + 0.300 = 0.520

Bei Durchführung der Regeln für Entscheidungs-Block (2) in der Reihenfolge ihrer Aufführung ergeben sich die Anteile der Terme der Ausgangsvariablen D_Nick zu:

weich: $(0.67 \cdot 0.22) \cdot 1 = 0.147$
mittel: $(0.67 \cdot 0.78) \cdot 0.5 = 0.261$
hart: $(0.67 \cdot 0.78) \cdot 0.5 = 0.261$
hart: $(0.67 \cdot 0) \cdot 1 = 0$
weich: $(0.33 \cdot 0.22) \cdot 1 = 0.073$
weich: $(0.33 \cdot 0.78) \cdot 0.8 = 0.205$
mittel: $(0.33 \cdot 0.78) \cdot 0.2 = 0.051$
mittel: $(0.33 \cdot 0) \cdot 0.5 = 0$
hart: $(0.33 \cdot 0) \cdot 0.5 = 0$

Terme der Ausgangsvariablen D_Nick durch Summierung ihrer Anteile:

weich = 0.147 + 0.073 + 0.205 = 0.425
mittel = 0.261 + 0.051 + 0 = 0.312
hart = 0.261 + 0 + 0 = 0.261

Die vorstehend ermittelten Ausgangsvariablen D_Wank und D_Nick werden, wie erläutert, dem Entscheidungs-Block (5) als Eingangsvariable zugeführt.

Bei Durchführung der Regeln für Entscheidungs-Block (5) in der Reihenfolge ihrer Aufführung ergeben sich die Anteile der Terme der Ausgangsvariablen D_Wank_Nick zu:

weich: $(0.425 \cdot 0.225) \cdot 1 = 0.096$
mittel: $(0.425 \cdot 0.225) \cdot 1 = 0.096$
hart: $(0.425 \cdot 0.520) \cdot 1 = 0.221$
mittel: $(0.312 \cdot 0.225) \cdot 1 = 0.070$
mittel: $(0.312 \cdot 0.225) \cdot 0.7 = 0.049$
hart: $(0.312 \cdot 0.225) \cdot 0.3 = 0.021$
hart: $(0.312 \cdot 0.520) \cdot 1 = 0.162$
hart: $(0.261 \cdot 0.225) \cdot 1 = 0.059$
hart: $(0.261 \cdot 0.225) \cdot 1 = 0.059$
hart: $(0.261 \cdot 0.520) \cdot 1 = 0.136$

Terme der Ausgangsvariablen D_Wank_Nick durch Summierung ihrer Anteile:

weich = 0.096
mittel = 0.096 + 0.070 + 0.049 = 0.215
hart = 0.221 + 0.021 + 0.162
      + 0.059 + 0.059 + 0.136 = 0.658

Wie oben erläutert, wird die linguistische Ausgangsvariable D_Wank_Nick dem Entscheidungs-Block "Schlechtweg FB" (8) nach Fig. 1 zur Weiterverarbeitung zugeführt. Daran anschließend werden die erwähnten weiteren Entscheidungs-Blöcke durchlaufen, und nach Durchlauf des letzten Entscheidungs-Blockes wird die Defuzzifizierung der linguistischen Ausgangsvariablen dieses Entscheidungs-Blockes in einen physikalischen Wert vorgenommen.

Zur Erläuterung des Verfahrens soll an dieser Stelle die Ausgangsvariable D_Wank_Nick des Entscheidungs-Blockes (5) defuzzifiziert werden.

Aufgabe der Defuzzifikation ist die Ermittlung eines "scharfen" physikalischen Wertes, der den "unscharfen" linguistischen Wert am besten annähert. Je nach dem Ziel einer besten Annäherung wird ein entsprechendes Verfahren der Defuzzifizierung ausgewählt.

Für das Anwendungsbeispiel wird das Ziel des besten Kompromisses bestimmt, wofür das Verfahren des Maximum-Zentrums (CoM = Center-of-Maximum-Verfahren) geeignet ist. Bei diesem Verfahren wird zunächst für jeden Term der typischste Wert bestimmt. Für einen Term vom Z-Typ ist der typischste Wert A, für einen Term vom Lambda-Typ ist der typischste Wert D, und für einen Term vom S-Typ ist der typischste Wert G.

In Fig. 4 sind die Terme der Ausgangsvariablen D_Wank_Nick entsprechend ihrer Größe an ihrem typischsten Wert eingezeichnet; für den Term weich ist dies der Pfeil (15) der Höhe 0.096 am Abszissenwert 0 %, für den Term mittel ist dies der Pfeil (16) der Höhe 0.215 am Abszissenwert 50 %, und für den Term hart ist es der Pfeil (17) der Höhe 0.658 am Abszissenwert 100 %.

Der scharfe physikalische Wert der linguistischen Variablen D_Wank_Nick sei nach Fig. 4 ein dimensionsloser Abszissenwert p (19) zwischen 0 % und 100 %. Entsprechend dem Maximum-Zentrums-Verfahren ist der Wert p diejenige Zahl eines besten Gleichgewichtes. Das beste Gleichgewicht wird dabei ermittelt, indem die Ergebnisse als "Gewichte" am Ort der typischsten Werte "balanciert" werden.

Die Balance für den Wert p wird rechnerisch durch das Gleichgewicht der Momente bestimmt, wobei. Momente als Produkte von "Gewichten", nämlich Pfeil-Höhen als "Kräften" und Abszissenwert-Abständen als "Kraftarmen" gebildet werden.

Angewandt auf den Punkt p (19) und die Pfeile (15, 16, 17) nach Fig. 2c ergibt sich hierbei ein rechtsdrehendes Moment

$$(100 - p) \cdot 0.658$$

und eine Summe linksdrehender Momente von

$$p \cdot 0.096 + (p - 50) \cdot 0.215$$

Die Gleichsetzung von rechtsdrehendem Moment zur Summe der linksdrehenden Momente führt zu der Gleichung

$$(100 - p) \cdot 0.658 = p \cdot 0.096 + (p - 50) \cdot 0.215 \,,$$

deren Auswertung einen Wert von
   $p = 79{,}0 \%$
ergibt.

Unter der Annahme, daß zur Einstellung der Dämpferkraft eines Dämpfers ein Strom zwischen 0 und 2 A verwendet wird, wobei 0 A für einen weichen und 2 A für einen harten Dämpfer stehen, ist der Dämpfer in diesem Fall mit einem Strom von

$$p \cdot 2\,A = 79\,\% \cdot 2\,A = 1.58\,A$$

zu beaufschlagen.

An dieser Stelle sei vorsorglich darauf hingewiesen, daß im Gegensatz zu diesem Typ eines Schwingungsdämpfers in weiter unten folgenden Erläuterungen auf Schwingungsdämpfer Bezug genommen wird, die bei dem Minimalwert des Stromes die härteste und bei dem Maximalwert des Stromes die weichste Kennung einstellen.

Die vorstehende Defuzzifizierung der Ausgangsvariablen D_Wank_Nick (66) für Entscheidungs-Block (5) nach Fig. 1 wurde lediglich zur Erläuterung des Verfahrens an sich durchgeführt. Bei Auswertung aller Entscheidungs-Blöcke   (1),(2),(3),(4),(5),(6),(7),(8),(9) entsprechend Fig. 1 findet für die Variable D_Wank_Nick (66) keine Defuzzifizierung statt. Es werden lediglich entsprechend den Regeln von Entscheidungs-Block (5) die Werte der dieser Variablen zugeordneten Terme weich, mittel und hart bestimmt, um die Variable D_Wank_Nick (66) dann als interne Variable dem Entscheidungs-Block (8) zuzuführen, bei dem sie als linguistische Eingangsvariable benutzt wird.

Im folgenden werden die Terme der oben definierten linguistischen Eingangsvariablen erläutert, soweit sie noch nicht im Zusammenhang mit den Erläuterungen der Entscheidungs-Blöcke (1),(2),(5) nach Fig. 1 beschrieben worden sind.

Für die linguistische Variable V_Fahrzeug (56) als Eingangsvariable für Entscheidungs-Block (3) nach Fig. 1 sind folgende linguistische Terme definiert:

Ein Term null mit Zugehörigkeitsfunktion vom Z-Typ mit einem Wert A von 0 und einem Wert B von 2;

ein Term rangier mit Zugehörigkeitsfunktion vom Pi-Typ mit einem Wert H von 0, einem Wert K von 2, einem Wert L von 10 und einem Wert M von 15;

ein Term klein mit Zugehörigkeitsfunktion vom Pi-Typ mit einem Wert H von 10, einem Wert K von 15, einem Wert L von 25 und einem Wert M von 30;

ein Term normal mit Zugehörigkeitsfunktion vom Pi-Typ mit einem Wert H von 25, einem Wert K von 30, einem Wert L von 50 und einem Wert M von 80;

ein Term schnell mit Zugehörigkeitsfunktion vom S-Typ mit einem Wert F von 50 und einem Wert G von 80.

Für die linguistische Variable X_Beschleunigung (57) als Eingangsvariable für Entscheidungs-Block (3) nach Fig. 1 sind folgende linguistische Terme definiert:

Ein Term bremsen mit Zugehörigkeitsfunktion vom Z-Typ mit einem Wert A von -100 und einem Wert B von 0;

ein Term null mit Zugehörigkeitsfunktion vom Lambda-Typ mit einem Wert D von 0, einem Wert C von -100 und einem Wert E von 100;

ein Term gas mit Zugehörigkeitsfunktion vom S-Typ mit einem Wert F von 0 und einem Wert G von 100.

Für die linguistische Variable Beladung (58) als Eingangsvariable für die Entscheidungs-Blöcke (3) und (4) nach Fig. 1 sind folgende linguistische Terme definiert:

Ein Term leer mit Zugehörigkeitsfunktion vom Z-Typ mit einem Wert A von 20 und einem Wert: B von 200;

ein Term voll mit Zugehörigkeitsfunktion vom S-Typ mit einem Wert F von 20 und einem Wert G von 200;

Für die linguistische Variable Ecas (59) als Eingangsvariable für Entscheidungs-Block (3) nach Fig. 1 sind folgende linguistische Terme definiert:

Ein Term nein mit Zugehörigkeitsfunktion vom Z-Typ mit einem Wert A von 0 und einem Wert B von 1;

ein Term ja mit Zugehörigkeitsfunktion vom S-Typ mit einem Wert F von 0 und einem Wert G von 1;

Für die linguistische Variable D_Fahrer1 (60) als interne Ausgangsvariable für Entscheidungs-Block (3) nach Fig. 1 sind linguistische Terme mit folgenden Namen definiert:

weich
mittel
hart

Für die linguistische Variable Y_Beschleunigung (61) als Eingangsvariable für Entscheidungs-Block (4) nach Fig. 1 sind folgende linguistische Terme definiert:

Ein Term gerade mit Zugehörigkeitsfunktion vom Z-Typ mit einem Wert A von 5 und einem Wert B von 30;

ein Term kurve mit Zugehörigkeitsfunktion vom S-Typ mit einem Wert F von 5 und einem Wert G von 30.

Für die linguistische Variable dY_Beschleunigung (62) als Eingangsvariable für Entscheidungs-Block (4) nach Fig. 1 sind folgende linguistische Terme definiert:

Ein Term klein mit Zugehörigkeitsfunktion vom Z-Typ mit einem Wert A von 100 und einem Wert B von 200;

ein Term groß mit Zugehörigkeitsfunktion vom S-Typ mit einem Wert F von 100 und einem Wert G von 200;

Für die linguistische Variable D_Fahrer2 (64) als interne Ausgangsvariable für Entscheidungs-Block (4) nach Fig. 1 sind linguistische Terme mit folgenden Namen definiert:

weich
mittel
hart

Für die linguistische Variable Schlechtweg (65) als Eingangsvariable für die Entscheidungs-Blöcke (6), (7) und (8) nach Fig. 1 sind folgende linguistische Terme definiert:

Ein Term gut mit Zugehörigkeitsfunktion vom Z-Typ mit einem Wert A von 0 und einem Wert B von 100;

ein Term schlecht mit Zugehörigkeitsfunktion vom S-Typ mit einem Wert F von 0 und einem Wert G von 100;

Für die linguistische Variable D_Fahrer1_SW (67) als interne Ausgangsvariable für Entscheidungs-Block (6) nach Fig. 1 sind linguistische Terme mit folgenden Namen definiert:

weich
mittel
hart

Für die linguistische Variable D_Fahrer2_SW (68) als interne Ausgangsvariable für Entscheidungs-Block (7) nach Fig. 1 sind linguistische Terme mit folgenden Namen definiert:

weich
mittel
hart

Für die linguistische Variable D_Fahrbahn (69) als interne Ausgangsvariable für Entscheidungs-Block (8) nach Fig. 1 sind linguistische Terme mit folgenden Namen definiert:

weich

mittel

hart

Für die linguistische Variable Daempfung (70) als zu defuzzifizierende Ausgangsvariable für Entscheidungs-Block (9) in oberster Hierarchie-Ebene nach Fig. 1 sind folgende linguistische Terme definiert:

Ein Term weich mit Zugehörigkeitsfunktion vom Z-Typ mit einem Wert A von 0 und einem Wert B von 50;

ein Term mittel mit Zugehörigkeitsfunktion vom Lambda-Typ mit einem Wert D von 50, einem Wert C von 0 und einem Wert E von 100;

ein Term hart mit Zugehörigkeitsfunktion vom S-Typ mit einem Wert F von 50 und einem Wert G von 100.

Die oben beschriebenen Definitionen der linguistischen Eingangs- wie Ausgangsvariablen mit der Festlegung ihrer Terme bilden die Basis für den Entwurf von Regeln für die Entscheidungs-Blöcke. Entsprechend der unterschiedlichen Anforderungen von Anwendung zu Anwendung sind die Regeln nicht fest, sondern sie werden Anwendungs-spezifisch entworfen. Die Fuzzy-Technik bietet gerade für den spezifischen Entwurf einfach zu handhabende Hilfsmittel an, wodurch die Realisierung besonders unaufwendig durchzuführen ist [Näheres siehe unten]. Im folgenden werden für Regeln von Entscheidungs-Blöcken, soweit oben für diese Entscheidungs-Blöcke über Regeln noch nichts ausgesagt worden ist, beispielhaft Gesichtspunkte zur Regel-Formulierung genannt; es wird bei diesen Beispiel-Erläuterungen auf die Definitionen der Variablen und ihre Terme zurückgegriffen.

Der Entscheidungs-Block (3) mit den Eingangsvariablen (56),(57),(58),(59) ermittelt den Dämpfungsbedarf D_Fahrer1 (60) für alle Aktionen des Fahrers, die auf die Bewegungen des Fahrzeugaufbaus in der Längsachse Einfluß nehmen.

Durch die Eingangsvariable V_Fahrzeug (56) ist in den Regeln der ermittelte Dämpfungsbedarf abhängig von den Geschwindigkeitsbereichen des Fahrzeugs gestaltet. Bei Stillstand (Term null) wird der maximale Dämpfungsbedarf gewählt [kein Stromverbrauch], bei sehr kleinen Geschwindigkeiten (Term rangier) wird der Dämpfungsbedarf etwas verringert, für kleine Geschwindigkeiten (Term klein) wird der Dämpfungsbedarf weiter verringert, wobei jedoch die Dämpfer-Einstellung weiterhin mittel-hart bleibt, da in diesem Geschwindigkeitsbereich ein Momentenüberschuß zu einem Aufbäumen des Fahrzeugs führt. Bei Normalgeschwindigkeiten (Term normal) wird der Dämpfungsbedarf komfortorientiert eingestellt, und bei schneller Fahrt (Term schnell) wird der Dämpfungsbedarf aus Sicherheitsgründen erhöht.

Bezüglich der Eingangsvariablen (57) wird in den Regeln berücksichtigt, daß bei Beschleunigungen der Dämpfungsbedarf erhöht wird; bei negativer Beschleunigung (Term bremsen) wird so der Tendenz zum Bremsnicken und bei positiver Beschleunigung (Term gas) der Neigung zum Anfahraufbäumen entgegengewirkt.

Die Eingangsvariable Beladung (58) wird in den Regeln dahingehend berücksichtigt, daß für das unbeladene Fahrzeug (Term leer) ein geringerer Dämpfungsbedarf als für das beladene Fahrzeug (Term voll) erforderlich ist.

Die linguistische Eingangsvariable Ecas (59) bewirkt in den Regeln, daß bei aktivierter Regelfunktion (Term ja) der Dämpfungsbedarf so klein, wie unter den anderen Randbedingungen möglich, eingestellt wird, da ein weicher Schwingungsdämpfer die Höhenverstellung am geringsten behindert.

Der Entscheidungs-Block (4) mit den Eingangsvariablen (61),(62),(58) ermittelt den Dämpfungsbedarf D_Fahrer2 (64) für alle Aktionen des Fahrers, die auf die Bewegungen des Fahrzeugaufbaus in der Querachse Einfluß nehmen.

Die Eingangsvariable Y_Beschleunigung (61) berücksichtigt in den Regeln, daß bei Geradeausfahrt (Term gerade) die Neigung zum Wanken weit weniger ausgeprägt ist als bei Kurvenfahrt (Term kurve).

Die Eingangsvariable dY_Beschleunigung (62) zeigt vorausschauend an, ob der Fahrer Lenkbewegungen ausführt, die zu einer erhöhten Querbeschleunigung führen werden, wodurch in den Regeln bei entsprechendem Gradienten (Term groß) im Vorgriff auf ein Wanken der Dämpfungsbedarf schon angehoben wird.

Die Eingangsvariable Beladung (58) wird in den Regeln für Entscheidungs-Block (4) in der gleichen Weise wie in den Regeln für Entscheidungs-Block (3) berücksichtigt.

Die Eingangsvariable Schlechtweg (65) wird in verschiedenen Entscheidungs-Blöcken, den Blöcken (6), (7) und (8), benutzt. In den Regeln für diese Blöcke wird sie mit jeweils einer anderen Variablen kombiniert, die in einem vorgelagerten Entscheidungs-Block als Ausgangsvariable erzeugt wird. Die Regeln für einen dieser Entscheidungs-Blöcke bewirken bei entsprechend schlechtem Straßenzustand (Term schlecht) durch Verknüpfung mit Termen der anderen Variablen (vowiegend Verwendung der Terme mittel, hart) eine Reduzierung des Dämpfungsbedarfes.

Wie oben erläutert, bestimmt die Ausgangsvariable Daempfung (70) des Entscheidungs-Blockes (9) nach Fig. 1 in oberster Hierarchie-Ebene den Dämpfungsbedarf des Fahrzeugs. Dieser Dämpfungsbedarf wird durch den durch Defuzzifizierung entstandenen scharfen Wert der linguistischen Ausgangsvariablen Daempfung (70) bestimmt; er stellt einen festen Zahlenwert im Bereich von 0 und 100 dar.

Dieser Wert wird einem Funktions-Block "Haltedauer" (10) nach Fig. 1 zugeführt. Dieser Funktions-Block beinhaltet keine Fuzzy Logic, er erzeugt nach den Prinzipien der scharfen Logik aus dem scharfen Eingangswert Daempfung (70) einen scharfen Ausgangswert Daempfung_Halten (71).

Der scharfe Wert Daempfung (70) schwankt während der Fahrt je nach Straßenzustand und Aktion des Fahrers. Wenn einmal aufgrund dieser Ursachen ein erhöhter Dämpfungsbedarf festgestellt worden ist, so soll beim Verschwinden der Ursachen der erhöhte Dämpfungsbedarf nicht sofort zurückgefahren werden. Der Funktions-Block "Haltedauer" (10) nach Fig. 1 trägt dieser Anforderung Rechnung. Der Ausgang Daempfung_Halten (71) folgt jeder Erhöhung des Eingangswertes Daempfung (70) verzögerungsfrei. Dagegen wird bei Verringerung des Wertes Daempfung (70) der vor der Abnahme bestehende höhere Wert für eine bestimmte Zeit festgehalten, die programmierbar ist [0.1 bis 5 Sekunden]. Nach Ablauf dieser Zeit wird der höhere Wert mit einem festen Gradienten über der Zeit reduziert, bis der geringere, augenblicklich vorliegende Eingangswert Daempfung (70) erreicht wird; der Gradient ist ebenfalls über einen Programm-Parameter zwischen 100 1/s und 20 1/s einstellbar.

Zur Erläuterung der Haltezeit sei angenommen, daß bei einem Fahrzeug ein starkes Wanken "rechts" in ein starkes Wanken "links" übergeht. Das starke Wanken "rechts" hat dabei zu einer entsprechenden Dämpferverhärtung geführt. Beim Übergang zum Wanken "links" wird ein Wankwinkel von Null durchschritten. Ohne die Haltezeit hätte dies zur Folge, daß der temporär vorhandene Wankwinkel in der Nähe von Null eine weiche Dämpferkennung einstellt, wo doch gerade beim Übergang eine sehr starke Bewegungen des Fahrzeugaufbaus stattfindet. Durch die Einführung der Haltezeit bleibt in Zweifelsfällen eine härtere Kennung eingeschaltet, wodurch derartige Effekte vermieden werden und die Sicherheit erhöht wird. Die durch Einführung des Gradienten erreichte Rampenfunktion verhindert ruckartige Übergänge von einem in einen anderen Zustand, dadurch ergibt sich ein besseres Fahrgefühl, und es werden z. B. auch Störgeräusche durch zu harte Dämpferumstellungen vermieden.

Der Ausgangswert Daempfung_Halten (71) stellt den scharfen Dämpfungsbedarf zur Einstellung der Schwingungsdämpfer des Fahrzeugs dar. Die Einstellung der Schwingungsdämpfer soll proportional zu seinem Zahlenwert erfolgen; der Zahlenwert liegt zwischen 0 und 100, wobei ein Zahlenwert von 0 die weichste Dämpferkennung und ein Zahlenwert von 100 die härteste Dämpferkennung bedeutet.

Die Kennlinie von Schwingungsdämpfern mit kontinuierlich verstellbarer Dämpfkraft ist neben anderen Einflüssen vorrangig durch die physikalischen Eigenschaften der zur Verstellung verwendeten Ventile bestimmt. Diese Verstellventile weisen im allgemeinen einen Zusammenhang zwischen dem die Stellgröße steuernden Strom und der Stellgröße selbst auf, die nichtlinear ist. Als Folge dessen sind die Kennlinien zwischen Strom und Dämpfkraft eines Verstell-Schwingungsdämpfers im allgemeinen nichtlinear.

Aufgrund dieser Nichtlinearität ist eine geeignete Konversion des Ausgangswertes Daempfung_Halten (71) entsprechend der nichtlinearen Schwingungsdämpfer-Kennlinie vorzusehen. Zur Kennlinien-Konversion sind in Fuzzy-Logic aufgebaute Konversions-Blöcke vorgesehen, denen der Ausgangswert Daempfung_Halten (71) als physikalische Eingangsvariable zugeführt wird. Es sind ein Konversions-Block "Kennlinie/Vorn" (11) für die Räder der Vorderachse, ein Konversions-Block "Kennlinie/Trieb" (12) für die Räder der Hinterachse [Antriebsachse] und ein Konversions-Block "Kennlinie/Lift" (13) für die Räder der Liftachse vorgesehen.

Die Funktionsweise der Kennlinien-Konversion unter Verwendung der Fuzzy-Logic wird am Beispiel des Konversions-Blockes (11) erläutert.

Für die Konversions-Blöcke (11, 12, 13) sind eine aus der physikalischen Ausgangsvariablen Daempfung_Halten (71) abgeleitete linguistische Eingangsvariable und eine linguistische Ausgangsvariable vorgesehen. Für Konversions-Block (11) sind dies die linguistische Eingangsvariable Daempfung_Vorn (72) und die linguistische Ausgangsvariable Strom_Vorn (73).

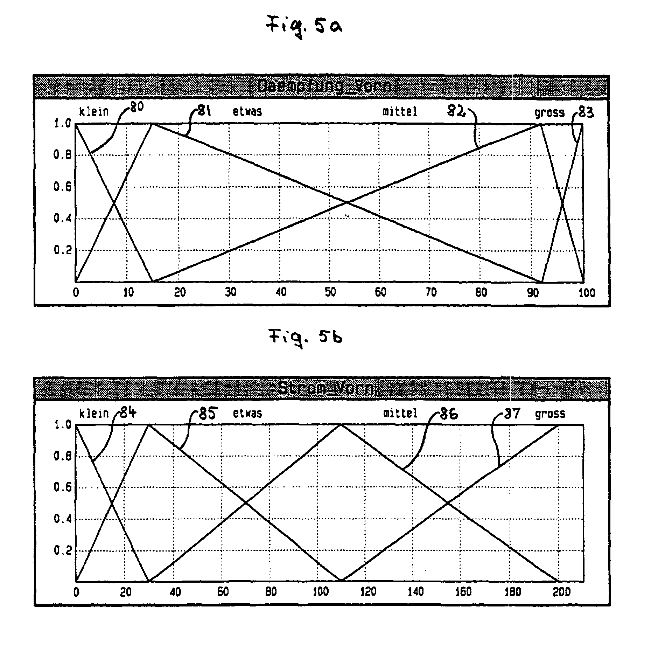

Für die linguistische Variable Daempfung_Vorn (72) sind entsprechend Fig. 5a folgende linguistische Terme definiert:

ein Term klein (80) mit Zugehörigkeitsfunktion vom Z-Typ mit einem Wert A von Null und einem Wert B von 15;

ein Term etwas (81) mit Zugehörigkeitsfunktion vom Lambda-Typ und einem Wert D von 15, einem Wert C von Null und einem Wert E von 92;

ein Term mittel (82) mit Zugehörigkeitsfunktion vom Lambda-Typ mit einem Wert D von 92, einem Wert C von 15 und einem Wert E von 100;

ein Term gross (83) mit Zugehörigkeitsfunktion vom S-Typ mit einem Wert F von 92 und einem Wert G von 100.

Die charakteristischen Werte für die Terme sind nach einer für das Anwendungsbeispiel benutzten Kennlinie für die Schwingungsdämpfer der Vorderachse gewählt: Diese Kennlinie weist im Wertebereich zwischen 0 und 15 eine starke Nichtlinearität auf, im Wertebereich zwischen 15 und 92 ist sie linear, und im Wertebereich zwischen 92 und 100 ist sie ebenfalls linear, mit jedoch einer gegenüber dem Bereich zwischen. 15 und 92 veränderten Steigung. Für diese 3 Wertebereiche sind die erläuterten, durch Überlappung entstehenden, 4 Terme (80, 81, 82, 83) vorgesehen.

Für die linguistische Ausgangsvariable Strom_Vorn (73) entsprechend Fig. 5b sind die folgenden, ebenfalls 4 linguistischen Terme definiert:

Ein Term klein (84) mit Zugehörigkeitsfunktion vom Z-Typ mit einem Wert A von Null und einem Wert B von 30;

ein Term etwas (85) mit Zugehörigkeitsfunktion vom Lambda-Typ mit einem Wert D von 30, einem Wert C von Null und einem Wert E von 110;

ein Term mittel (86) mit Zugehörigkeitsfunktion vom Lambda-Typ mit einem Wert D von 110, einem Wert C von 30 und einem Wert E von 200;

ein Term groß (87) mit Zugehörigkeitsfunktion vom S-Typ mit einem Wert F von 110 und einem Wert G von 200.

Für Konversions-Block (11) gelten folgende Regeln:

WENN Daempfung_Vorn = klein DANN Strom_Vorn = 0.17 · groß;

WENN Daempfung_Vorn = etwas DANN Strom_Vorn = 1.00 • mittel ;

WENN Daempfung_Vorn = mittel DANN Strom_Vorn = 1.00 · etwas;

WENN Daempfung_Vorn = gross DANN Strom_Vorn = 1.00 · klein

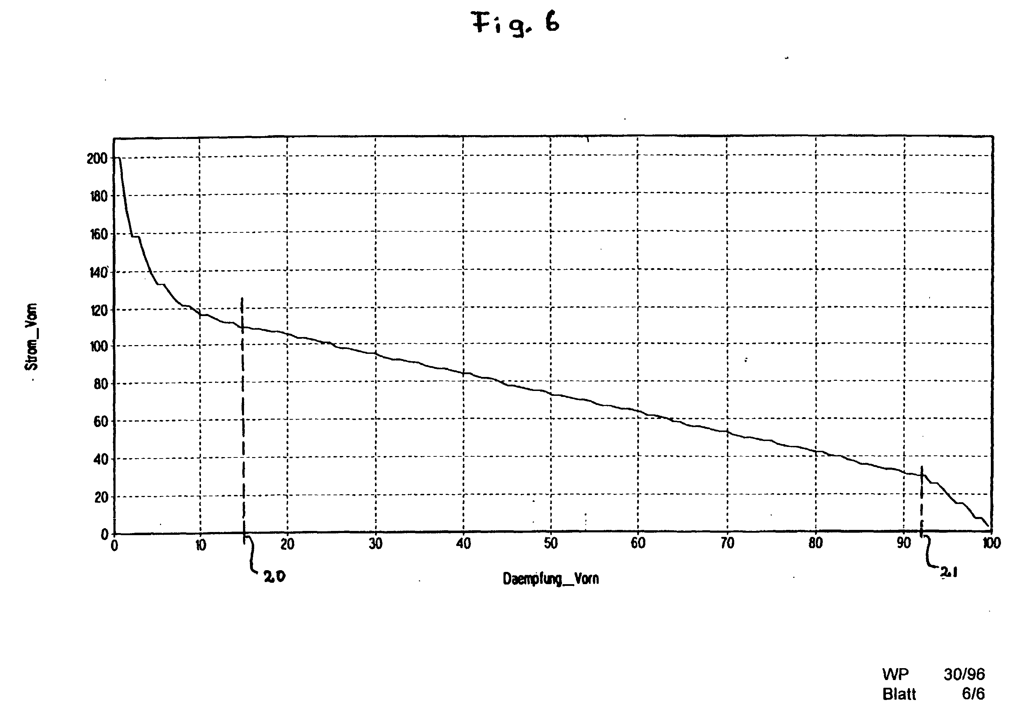

Konversions-Block (11) erzeugt unter Verwendung der linguistischen Eingangsvariablen Daempfung_Vorn mit ihren Termen, der linguistischen Ausgangsvariablen Strom_Vorn mit ihren Termen, den für diesen Konversions-Block geltenden Regeln und der Defuzzifizierung nach der Maximum-Zentrums-Methode eine Kennlinie entsprechend Fig. 6. Auf der Abszisse ist die scharfe physikalische Eingangsvariable Daempfung_Vorn und auf der Ordinate die scharfe physikalische Ausgangsvariable Strom_Vorn angegeben; entsprechend der angegebenen Normierung bedeutet ein Ordinaten-Wert von 200 einen Strom von 2 A.

Die nach der Kennlinie entsprechend Fig. 6 ermittelte scharfe Ausgangsvariable Strom_Vorn stellt denjenigen physikalischen Wert für die eigentliche Ansteuerung der Schwingungsdämpfer an den Rädern der Vorderachse dar.

Die im Anwendungsbeispiel für die Vorderachse gewählten Schwingungsdämpfer stellen bei einem Strom von 0 A die härteste Kennung und bei einem Strom von 2 A die weichste Kennung ein. Derartige Stoßdämpfer haben den Vorteil, daß bei Fahrzeugstillstand automatisch die härteste Kennung eingeschaltet ist, ohne daß ein Stromverbrauch stattfindet.

Mit der Kennlinie nach Fig. 6 werden zweierlei Funktionen durchgeführt; es wird erstens eine Invertierung Strom/Dämpfung derart durchgeführt, daß bei einem Wert der Daempfung_Vorn von 0 der Maximalwert 2 A des Dämpfer-Stroms und bei einem Wert Daempfung_Vorn von 100 der Minimalwert des Dämpfer-Stroms von 0 A gegeben ist.

Zum zweiten realisiert die Kennlinie nach Fig. 6 die nichtlineare Kennlinie des Schwingungsdämpfers selbst. An der Stelle des Wertes Dämpfung_Vorn von 15 (20) ist deutlich der Übergang von dem ersten nichtlinearen Wertebereich der Kennlinie in den zweiten linearen Wertebereich der Kennlinie erkennbar, und an der Stelle Daempfung_Vorn von 92 (21) erkennt man den Übergang vom zweiten linearen Wertebereich zum dritten linearen Wertebereich mit der veränderten Steigung.

Am Beispiel des Konversions-Blockes (11) nach Fig. 1 werden die Vorteile der Anwendung der Fuzzy-Technik entsprechend der Erfindung besonders deutlich. Als Grundlage aller Entwicklungen wird das oben erwähnte Fuzzy-Entwicklungswerkzeug verwendet. Bei diesem Entwicklungswerkzeug werden die Definitionen der linguistischen Variablen Daempfung_Vorn (72) und Strom_Vorn (73) mit ihrem linguistischen Term eingegeben, und dann werden die Regeln erstellt. Mit diesem ersten Ansatz wird eine Simulation durchgeführt und das Simulationsergebnis beurteilt. Im allgemeinen führt der erste Versuch noch nicht zum Ziel, wodurch verschiedene Optimierungsdurchgänge erforderlich sind.

Der Vorteil von Fuzzy-Entwicklungswerkzeugen besteht darin, daß Veränderungen von linguistischen Variablen, von Termen von linguistischen Variablen, von Regeln und von Vorgaben zur Defuzzifizierung auf einfache Weise graphisch eingegeben werden. Auf diese Weise kann in vergleichbar kurzer Zeit eine Off-Line-Optimierung durchgeführt werden.

Nach der erfolgten Off-Line-Optimierung erfolgt die endgültige On-Line-Optimierung vor Ort unter Verwendung der gleichen Fuzzy-Entwicklungswerkzeuge.

Auf die am Beispiel des Konversions-Blockes (11) beschriebene Weise können individuelle Kennlinien für die Konversions-Blöcke (12) und (13) erstellt werden, indem für die Variablen (74, 75, 76, 77) entsprechende Terme definiert, Regeln aufgestellt und die Methode der Defuzzifizierung festgelegt werden.

Der Grund für individuelle Festlegungen besteht u. a. darin, daß man an der Vorderachse und der Hinterachse z. B. unterschiedliche Schwingungsdämpfer-Typen einsetzt. Auch soll z. B. die Dämpferauslegung zwischen Vorder- und Hinterachse unterschiedlich ausgestaltet werden, um am Platz des Fahrers einen erhöhten Komfort sicherzustellen, was für die Ladung über der Hinterachse nicht von vorrangiger Bedeutung ist. Bei speziellen Anforderungen kann auch darüber hinaus für die Schwingungsdämpfer einer Achse selbst, z. B. die Schwingungsdämpfer links und rechts der Hinterachse, eine unterschiedliche Dämpferkennung gewählt werden.

Als weiteres Beispiel sei genannt, daß durch Variation der Kennlinien zwischen Vorder- und Hinterachse bei identischen Schwingungsdämpfern ein unterschiedliches Verhalten und bei unterschiedlichen Schwingungsdämpfern zwischen Vorder- und Hinterachse ein identisches Verhalten realisiert werden kann.

Alle diese beispielhaft genannten Anforderungen können mit durch Fuzzy Logic erzeugten Kennlinien realisiert werden. Gegenüber einer Realisierungen von nichtlinearen Kennlinien mit z. B. Tabellen weist die Realisierung nach der Fuzzy Logic neben ihrer Flexibilität und leichten Änderbarkeit auch den Vorteil auf, daß nur ein vergleichsweise kleiner elektronischer Speicher benötigt wird.

Die Erfindung ist nicht auf das erläuterte Ausführungsbeispiel beschränkt; für die Erfindung ist entscheidend, daß der Dämpfungsbedarf der Schwingungsdämpfer des Fahrzeugs anwendungsbezogen in Abhängigkeit von physikalischen Variablen bestimmt wird, die aus der Sensorik des Fahrzeugs abgeleitet werden. Den physikalischen Variablen werden entsprechend der Fuzzy Logic geeignete linguistische Variable zugeordnet. Die linguistischen Variablen werden dann entsprechend ihrer gewünschten Beeinflussung des Dämpfungsbedarfs in Entscheidungs-Blöcke sortiert, die in Form eines hierarchisch aufgebauten Entscheidungs-Baumes gegliedert werden, und für jeden Entscheidungs-Block werden dann entsprechend dieser Beeinflussung die geeigneten Fuzzy-Regeln formuliert.

Die Fuzzy-Technik erlaubt es, den Einfluß der Variablen auf den Dämpfungsbedarf derart auszugestalten, daß einerseits der Einfluß der Variablen auf den Dämpfungsbedarf in der gewünschten Weise erfolgt, daß aber andererseits alle scharfen zeitlichen Übergänge des Dämpfungsbedarfes vermieden werden [weiche Anpassung statt ruckartigem Verhalten], die das Fahrverhalten beeinträchtigen würden.

**Patentansprüche**

1. Verfahren zur Steuerung der Schwingungsdämpfer in einem Fahrzeug mit einer Niveauregeleinrichtung, wobei der Fahrzeugaufbau durch Druckmittelkammern für Luft getragen wird und die Druckmittelkammern mit einer Ventileinrichtung verbunden sind, welche zum Zwecke der Luftmengenveränderung in den Druckmittelkammern diese mit einer Druckmittelquelle oder einer Druckmittelsenke verbindet;
mit folgenden Schritten :

a) über Sensoren werden Ist-Abstände zwischen Fahrzeugachsen und dem Fahrzeugaufbau ermittelt;

b) einer Regeleinrichtung werden frei wählbare Soll-Abstände zwischen den Fahrzeugachsen und dem Fahrzeugaufbau vorgegeben und die Regeleinrichtung steuert die Ventileinrichtung in Abhängigkeit von der Regelabweichung, nämlich den Differenzen zwischen den entsprechenden Soll- und Ist-Abständen an, wodurch in den Druckmittelkammern durch Veränderung der Luftmengen die Ist-Abstände gleich den Soll-Abständen werden;

c) durch Auswertung des Zeitverlaufs der Ist-Abstände wird ein Dämpfungsbedarf bestimmt, der als Vorgabe für die Einstellung von kontinuierlich verstellbaren Schwingungsdämpfern dient;

d) Zur Auswertung wird das Verfahren des logischen Schließens auf unscharfe Mengen (Fuzzy Logic) angewendet das aus einem ersten Schritt der Fuzzifizierung aus einem physikalischen Wert, einem zweiten Schritt der Regelauswertung und einem dritten Schritt der Defuzzifizierung in einen physikalischen Wert besteht;

e) Entscheidungen werden innerhalb von logischen Entscheidungs-Blöcken mit mindestens einer linguistischen Eingangsvariablen und mit einer linguistischen Ausgangsvariablen getroffen;

f) Die Berechnung wird unter Verwendung einer den Wankwinkel (50) beschreibenden linguistischen Eingangsvariablen durchgeführt;

g) die Berechnung wird unter Verwendung einer linguistischen Eingangsvariablen durchgeführt, die die Abweichung (51) der Wankfrequenz von der Wank-Eigenfrequenz bestimmt;

h) Die Berechnung wird unter Verwendung einer den Nickwinkel (53) beschreibenden linguistischen Eingangsvariablen durchgeführt;

i) die Berechnung wird unter Verwendung einer linguistischen Eingangsvariablen durchgeführt, die die Abweichung (54) der Nickfrequenz von der Nick-Eigenfrequenz bestimmt.

2. Verfahren nach Anspruch 1, **gekennzeichnet durch** die folgenden Merkmale:

a) Entscheidungen werden in Entscheidungs-Blöcken in mindestens zwei Hierarchie-Ebenen, einer ersten und einer zweiten Ebene getroffen, wobei die linguistischen Eingangsvariablen den Entscheidungs-Blöcken der ersten Ebene als Eingänge zugeführt werden;

b) In der ersten und der zweiten Ebene werden Entscheidungen in mindestens drei Entscheidungs-Blöcken (1), (2), (5) getroffen;

c) in einem ersten Entscheidungs-Block (1) in der ersten Ebene wird der Dämpfungsbedarf für das Wanken (52) berechnet;

d) in einem zweiten Entscheidungs-Block (2) in der ersten Ebene wird der Dämpfungsbedarf für das Nicken (55) berechnet;

e) in einem dritter Entscheidungs-Block (5) in der zweiten Ebene wird der gewichtete Dämpfungsbedarf (66) für das Wanken und das Nikken berechnet.

3. Verfahren nach einem der Ansprüche 1 oder 2, **dadurch gekennzeichnet, daß** die Berechnung unter Verwendung einer die Beladung des Fahrzeugs beschreibenden linguistischen Eingangsvariablen (58) durchgeführt wird.

4. Verfahren nach Anspruch 3, **dadurch gekennzeichnet, daß** die Berechnung unter Verwendung einer die Geschwindigkeit des Fahrzeugs beschreibenden linguistischen Eingangsvariablen (56) durchgeführt wird.

5. Verfahren nach Anspruch 4, **dadurch gekennzeichnet, daß** die Berechnung unter Verwendung einer die Längsbeschleunigung des Fahrzeugs beschreibenden linguistischen Eingangsvariablen (57) durchgeführt wird.

6. Verfahren nach Anspruch 5, **dadurch gekennzeichnet, daß** die Berechnung unter Verwendung einer die Querbeschleunigung des Fahrzeugs beschreibenden linguistischen Eingangsvariablen (61) durchgeführt wird.

7. Verfahren nach Anspruch 6, **dadurch gekennzeichnet, daß** die Berechnung unter Verwendung einer den Straβenzustand beschreibenden linguistischen Eingangsvariablen (65) durchgeführt wird.

8. Verfahren nach mindestens einem der Ansprüche 1 bis 7, **dadurch gekennzeichnet, daß** der für einen Schwingungsdämpfer vorgesehene Wert für die Einstellung einer über einen Eingang und einen Ausgang verfügenden Konversionseinheit (11), (12), (13) eingangsseitig zugeführt wird, deren Ausgang zur Schwingungsdämpfer-Ansteuerung verwendet wird.

9. Verfahren nach Anspruch 8, **dadurch gekenn-** **zeichnet, daß** für die Konversionseinheit eine frei vorgebbare Kennlinie benutzt wird.

10. Verfahren nach Anspruch 9, **dadurch gekennzeichnet, daß** zur Realisierung der Kennlinie das Verfahren des logischen Schließens auf unscharfe Mengen (Fuzzy Logic) angewendet wird.

## Claims

1. Method for controlling vibration dampers in a vehicle having a level control device, wherein the vehicle superstructure is supported by pressure medium chambers for air and the pressure medium chambers are connected to a valve device, which connects them to a pressure medium source or to a pressure medium sink for the purpose of changing the amount of air in the pressure medium chambers; having the following steps:

   a) actual spacings between vehicle axles and the vehicle superstructure are detected by means of sensors;

   b) a control device is input with freely selectable desired spacings between the vehicle axles and the vehicle superstructure, and the control device controls the valve device in dependence upon the control error, namely the differences between the corresponding desired spacings and actual spacings, as a result of which the actual spacings become equal to the desired spacings by changing the amounts of air in the pressure medium chambers;

   c) as a result of evaluation of the course of the actual spacings over time, a damping requirement is determined which serves as an input for the adjustment of continuously variable vibration dampers;

   d) for evaluation, the method of logical inference based on imprecise quantities (fuzzy logic) is applied, consisting of a first step of fuzzification from a physical value, a second step of control evaluation and a third step of defuzzification into a physical value;

   e) decisions are taken within logic decision blocks having at least one linguistic input variable and having a linguistic output variable;

   f) the calculation is performed using a linguistic input variable describing the roll angle (50);

   g) the calculation is performed using a linguistic input variable which determines the difference (51) between the roll frequency and the roll resonant frequency;

h) the calculation is performed using a linguistic input variable describing the pitch angle (53);

i) the calculation is performed using a linguistic input variable which determines the difference (54) between the pitch frequency and the pitch resonant frequency.

2. Method according to claim 1, **characterised by** the following features:

   a) decisions are taken within decision blocks in at least two hierarchy levels - a first and a second level, the linguistic input variables being supplied as inputs to the decision blocks of the first level;

   b) in the first and second level, decisions are taken in at least three decision blocks (1), (2), (5);

   c) in a first decision block (1) of the first level, the damping requirement for rolling (52) is calculated;

   d) in a second decision block (2) of the first level, the damping requirement for pitching (55) is calculated;

   e) in a third decision block (5) of the first level, the weighted damping requirement (66) for rolling and pitching is calculated.

3. Method according to either claim 1 or claim 2, **characterised in that** the calculation is performed using a linguistic input variable (58) describing the loading of the vehicle.

4. Method according to claim 3, **characterised in that** the calculation is performed using a linguistic input variable (56) describing the speed of the vehicle.

5. Method according to claim 4, **characterised in that** the calculation is performed using a linguistic input variable (57) describing the longitudinal acceleration of the vehicle.

6. Method according to claim 5, **characterised in that** the calculation is performed using a linguistic input variable (61) describing the transverse acceleration of the vehicle.

7. Method according to claim 6, **characterised in that** the calculation is performed using a linguistic input variable (65) describing the road condition.

8. Method according to at least one of claims 1 to 7, **characterised in that** the value provided for the adjustment of a vibration damper is supplied on the input side to a conversion unit (11), (12), (13) provided with an input and an output, the output of which is used for vibration damper actuation.

9. Method according to claim 8, **characterised in that** a freely specifiable characteristic curve is used for the conversion unit.

10. Method according to claim 9, **characterised in that**, for producing the characteristic curve, the method of logical inference based on imprecise quantities (fuzzy logic) is applied.

**Revendications**

1. Procédé pour commander un amortisseur de vibrations dans un véhicule comportant un dispositif de régulation de niveau, selon lequel la structure du véhicule est portée par des chambres à fluide sous pression, prévues pour de l'air et les chambres à fluide sous pression sont reliées à un dispositif à soupapes, qui, pour modifier la quantité d'air dans une chambre à fluide sous pression, relie ces chambres à une source de fluide sous pression ou à un dispositif d'absorption de fluide sous pression, comprenant les étapes suivantes :

   a) les distances réelles entre les essieux du véhicule et la structure du véhicule sont déterminées au moyen de capteurs;
   b) des distances de consigne, pouvant être choisies librement, entre les essieux du véhicule et la structure du véhicule sont prédéterminées pour un dispositif de régulation et le dispositif de régulation commande le dispositif à soupapes en fonction de l'écart de régulation à savoir la différence entre la distance de consigne correspondante et la valeur réelle, ce qui a pour effet que les distances réelles peuvent être rendues égales aux distances de consigne par modification des quantités d'air dans les chambres pour fluide comprimé;
   c) un besoin d'amortissement est déterminé par évaluation de l'allure dans le temps des distances réelles, ce besoin d'amortissement étant utilisé comme prescription pour le réglage d'amortisseurs de vibrations réglables continûment;
   d) pour l'évaluation, on utilise le procédé de la décision logique sur des quantités imprécises (logique floue), qui comprend un premier pas de logique floue à partir d'une valeur physique, un deuxième pas d'évaluation de régulation et un troisième pas de suppression de la logique floue pour obtenir une valeur physique;

e) des décisions sont prises à l'intérieur de blocs logiques de décision logique avec au moins une variable d'entrée linguistique et une variable de sortie linguistique;

f) le calcul est exécuté moyennant l'utilisation d'une variable d'entrée linguistique décrivant l'angle de roulis (50) ;

g) le calcul est exécuté moyennant l'utilisation d'une variable d'entrée linguistique, qui détermine l'écart (51) de la fréquence de roulis par rapport à la fréquence propre de roulis;

h) le calcul est exécuté moyennant l'utilisation d'une variable d'entrée linguistique décrivant l'angle de tangage (53) ;

i) le calcul est exécuté moyennant l'utilisation d'une variable d'entrée linguistique qui détermine l'écart (54) de la fréquence de roulispar rapport à la fréquence propre de tangage.

2.  Procédé selon la revendication 1, **caractérisé par** les caractéristiques suivantes :

    a) des décisions sont prises dans des blocs de décision dans au moins deux plans hiérarchiques, un premier plan et un second plan, les variables d'entrée linguistiques étant envoyées en tant qu'entrées aux blocs de décision du premier plan;

    b) dans les premier et second plans, des décisions sont prises dans au moins trois blocs de décision (1), (2), (5);

    c) dans un premier bloc de décision (1) dans le premier plan, le besoin d'amortissement pour le roulis (52) est calculé;

    d) dans un second bloc de décision (2) dans le premier plan, le besoin d'amortissement est calculé pour le tangage (55);

    e) dans un troisième bloc de décision (5) dans le second plan, le besoin d'amortissement pondéré (66) pour le roulis et le tangage est calculé.

3.  Procédé selon l'une des revendications 1 ou 2, **caractérisé en ce que** le calcul est exécuté moyennant l'utilisation d'une variable d'entrée linguistique (58) décrivant la charge du véhicule.

4.  Procédé selon la revendication 3, **caractérisé en ce que** le calcul est exécuté moyennant: l'utilisation d'une variable d'entrée linguistique (56) décrivant la vitesse du véhicule.

5.  Procédé selon la revendication 4, **caractérisé en ce que** le calcul est exécuté moyennant l'utilisation d'une variable d'entrée linguistique (57) décrivant l'accélération longitudinale du véhicule.

6.  Procédé selon la revendication 5, **caractérisé en ce que** le calcul est exécuté moyennant l'utilisation d'une variable d'entrée linguistique (61) décrivant l'accélération transversale du véhicule.

7.  Procédé selon la revendication 6, **caractérisé en ce que** le calcul est exécuté moyennant l'utilisation d'une variable d'entrée linguistique (65) décrivant l'état de la chaussée.

8.  Procédé selon au moins l'une des revendications 1 à 7, **caractérisé en ce que** la valeur prévue pour un amortisseur de vibrations est envoyée pour le réglage, côté entrée, à une unité de construction (11), (12), (13), qui dispose d'une entrée et d'une sortie et dont la sortie est utilisée pour la commande de l'amortisseur de vibrations.

9.  Procédé selon la revendication 8, **caractérisé en ce que** pour l'unité de conversion on utilise une courbe caractéristique pouvant être prédéterminée librement.

10. Procédé selon la revendication 9, **caractérisé en ce que** pour la réalisation de la courbe caractéristique, on utilise le procédé de la conclusion logique prise sur la base de la quantité imprécise (logique floue).

Fig. 1

EP 0 844 115 B1

Fig. 2a

Fig. 2b

23

Fig. 3a

Fig. 3b

24

Fig. 4

Fig. 5a

Fig. 5b

# Fig. 6

EP 0 844 115 B1